(19) Europäisches Patentamt / European Patent Office / Office européen des brevets

(11) **EP 4 699 957 A1**

(12) **EUROPEAN PATENT APPLICATION**
published in accordance with Art. 153(4) EPC

(43) Date of publication:
**25.02.2026 Bulletin 2026/09**

(21) Application number: **24791912.9**

(22) Date of filing: **11.04.2024**

(51) International Patent Classification (IPC):
**B65G 1/04** (2006.01)   **B65G 1/137** (2006.01)
**G06Q 10/08** (2024.01)

(52) Cooperative Patent Classification (CPC):
**B65G 1/04; B65G 1/137; G06Q 10/08**

(86) International application number:
**PCT/CN2024/087237**

(87) International publication number:
**WO 2024/217327 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 21.04.2023   CN 202310440134
21.04.2023   CN 202310434449

(71) Applicant: **Beijing Geekplus Technology Co. Ltd
Beijing 100102 (CN)**

(72) Inventor: **JIA, Yuchen
Beijing 100102 (CN)**

(74) Representative: **Manna, Sara
Società Italiana Brevetti S.p.A.
Piazza di Pietra, 39
00186 Roma (IT)**

(54) **SCHEDULING METHOD AND APPARATUS FOR CARGO UNIT**

(57) A scheduling method and apparatus for a cargo unit. The method comprises: acquiring a first number of caching positions and a second number of occupied caching positions in a first storage area (100), wherein the first storage area (100) comprises at least one storage rack (120), and a plurality of caching positions and a plurality of storage positions are preset on the storage rack (120); according to the first number and the second number, determining a caching position usage rate of the first storage area (100) (204); when the caching position usage rate reaches a preset usage rate threshold value, determining a target cargo unit from cargo units which are cached by the occupied caching positions (206); and sending a cargo unit carrying instruction to a first carrying device (110) in the first storage area (100), so as to control the first carrying device (110) to carry the target cargo unit to a target vacant storage position (208). By means of the scheduling method and apparatus, the carrying time of a first carrying device (110) can be saved on, the processing period of the first carrying device (110) can be shortened, and the carrying efficiency of the first carrying device (110) can be improved.

A first numeric count of cache locations in a first storage region and a second numeric count of occupied cache locations in the first storage region are obtained — 202

According to the first numeric count and the second numeric count, a cache location utilization rate of the first storage region is determined — 204

When the cache location utilization rate reaches a preset utilization rate threshold, a target goods unit is determined among the goods units cached in the occupied cache locations — 206

A goods unit transfer instruction is sent to the first transfer device in the first storage region to control the first transfer device to transfer the target goods unit to a target idle storage location — 208

Fig. 2

**Description**

The present disclosure claims the priority of Chinese Patent Applications No. 202310440134.4 and No. 202310434449.8 filed on April 21, 2023, the entire contents of which are incorporated into the present disclosure by reference.

**FIELD**

The present disclosure relates to the field of warehousing technologies, in particular to a goods unit scheduling method and a goods unit scheduling device.

**BACKGROUND**

In a warehousing operation scenario, a robot may move in a passage between goods shelves to execute a transfer task. The goods shelf is pre-provided with a certain number of storage locations and a certain number of cache locations. The storage locations are used for storing containers and the cache locations are used for temporarily storing containers. However, due to the limited number of the cache locations on the goods shelf, with the operation of a warehousing region, the number of idle cache locations that may be used to temporarily storing containers gradually decreases, thus affecting the transfer efficiency of the robot.

**SUMMARY**

Embodiments of the present disclosure provide a goods unit scheduling method and a goods unit scheduling device.

According to embodiments of a first aspect of the present disclosure, there is provided a goods unit scheduling method, which is performed by a control device and includes: first, obtaining a first numeric count of cache locations in a first storage region of a warehousing system and a second numeric count of occupied cache locations in the first storage region, where the first storage region includes at least one storage rack, and each storage rack is pre-provided with a plurality of cache locations and a plurality of storage locations; second, determining a cache location utilization rate of the first storage region according to the first numeric count and the second numeric count; then, determining a target goods unit among the goods units cached in the occupied cache locations in a case that the cache location utilization rate reaches a preset utilization rate threshold; and finally, sending a goods unit transfer instruction to a first transfer device in the first storage region to control the first transfer device to transfer the target goods unit to a target idle storage location in the first storage region.

According to embodiments of a second aspect of the present disclosure, there is provided a goods unit scheduling device, which includes an obtaining module, a first determining module, a second determining module and a control module. The obtaining module is configured to obtain a first numeric count of cache locations in a first storage region of a warehousing system and a second numeric count of occupied cache locations in the first storage region. The first storage region includes at least one storage rack, and each storage rack is pre-provided with a plurality of cache locations and a plurality of storage locations. The first determining module is configured to determine a cache location utilization rate of the first storage region according to the first numeric count and the second numeric count. The second determining module is configured to determine a target goods unit among the goods units cached in the occupied cache locations in a case that the cache location utilization rate reaches a preset utilization rate threshold. The control module is configured to send a goods unit transfer instruction to a first transfer device in the first storage region to control the first transfer device to transfer the target goods unit to a target idle storage location.

According to embodiments of a third aspect of the present disclosure, a computing device is provided, which includes a memory, a processor and computer instructions stored in the memory and executable on the processor. The processor is configured to perform the steps of the goods unit scheduling method described in the first aspect, when executing the computer instructions.

According to embodiments of a fourth aspect of the present disclosure, a computer-readable storage medium is provided, which stores computer instructions that, when executed by a processor, cause the processor to perform the steps of the goods unit scheduling method described in the first aspect.

According to embodiments of a fifth aspect of the present disclosure, there is provided a computer program product, which includes a computer program stored on a non-transitory computer-readable storage medium, and the computer program includes program instructions, which, when executed by a computer, cause the computer to perform the steps of the goods unit scheduling method described in the first aspect.

According to embodiments of a sixth aspect of the present disclosure, there is provided a computer program which, when executed by a processor, causes the processor to perform the steps of the goods unit scheduling method described in the first aspect.

**BRIEF DESCRIPTION OF THE DRAWINGS**

Fig. 1A is a schematic diagram of a goods unit scheduling scenario provided by some embodiments of the present disclosure.
Fig. 1B is a schematic diagram of a storage rack provided by some embodiments of the present disclosure.
Fig. 1C is a schematic diagram of another goods unit scheduling scenario provided by some embodiments of the present disclosure.

Fig. 1D is a schematic diagram of another storage rack provided by some embodiments of the present disclosure.

Fig. 2 is a schematic diagram of a goods unit scheduling method provided by some embodiments of the present disclosure.

Fig. 3 is a schematic diagram of another goods unit scheduling method provided by some embodiments of the present disclosure.

Fig. 4A is a schematic diagram of another goods unit scheduling scenario provided by some embodiments of the present disclosure.

Fig. 4B is a schematic diagram of a goods unit storage scenario provided by some embodiments of the present disclosure.

Fig. 4C is a schematic diagram of another goods unit storage scenario provided by some embodiments of the present disclosure.

Fig. 4D is a schematic diagram of another goods unit storage scenario provided by some embodiments of the present disclosure.

Fig. 5 is a schematic diagram of yet another goods unit scheduling method provided by some embodiments of the present disclosure.

Fig. 6 is a schematic diagram of a storage scenario of single-sided workstations provided by some embodiments of the present disclosure.

Fig. 7 is a schematic diagram of a storage scenario of double-sided workstations provided by some embodiments of the present disclosure.

Fig. 8 is a schematic diagram of another storage scenario of double-sided workstations provided by some embodiments of the present disclosure.

Fig. 9 is a schematic diagram of yet another goods unit scheduling method provided by some embodiments of the present disclosure.

Fig. 10 is a schematic diagram of a goods unit scheduling device provided by some embodiments of the present disclosure.

Fig. 11 is a schematic diagram of a computing device provided by some embodiments of the present disclosure.

## DETAILED DESCRIPTION

In the following description, numerous specific details are set forth in order to provide a thorough understanding of the present disclosure. However, the present disclosure may be implemented in many other ways different from those described here, and those skilled in the art may make similar promotion without violating the connotation of the present disclosure, so the present disclosure is not limited by the specific embodiments disclosed below.

Terms used in one or more embodiments of the present disclosure are for the purpose of describing specific embodiments only and are not intended to limit one or more embodiments of the present disclosure. The singular forms "a", "an" and "the" used in one or more embodiments of the present disclosure and the appended claims are also intended to include the plural forms, unless the context clearly indicates other meaning. It should also be understood that the term "and/or" used in one or more embodiments of the present disclosure refers to and includes any or all possible combinations of one or more associated listed items.

It should be understood that although that terms first, second, etc. may be used to describe various information in one or more embodiments of the present disclosure, the information should not be limited to these terms. These terms are only used to distinguish the same type of information from each other. For example, without departing from the scope of one or more embodiments of the present disclosure, the first information may also be called the second information, and similarly, the second information may also be called the first information. Depending on the context, the word "if" as used herein may be interpreted as "when" or "while" or "in response to determining...".

First, terms related to the following embodiments of the present disclosure will be explained.

SKU: a stock keeping unit, that is, the basic unit of stock in and out measurement, which may be a piece, a box, a pallet, etc. It is extended to the abbreviation of a product unified number, and each product has a unique SKU number.

In some embodiments, a robot may work in a passage between goods shelf in a warehousing region, and the goods shelf in the warehousing region is pre-provided with a certain number of storage locations and a certain number of cache locations. The storage locations are located above the cache locations, the storage locations are used for storing containers, and the cache locations are used for temporarily storing containers. The containers may include goods boxes, material boxes, original boxes, etc. The following embodiments are illustrated by taking the goods box as an example of the container. For example, a first robot may transfer the goods box to the cache location at a bottom layer of the goods shelf for temporary storage, and then a second robot may transfer the goods box temporarily stored in the cache location to an upper storage location for storage.

In some embodiments, the cache locations are arranged at the bottom layer of the goods shelf, and the numeric count of the cache locations is limited. After the robot moves the goods box to the cache location for temporary storage, if the goods box in the cache location is not moved to the storage location in time, the numeric count of invalidly occupied cache locations will gradually increase and the numeric count of available cache locations will gradually decrease, thus affecting the transfer efficiency of the robot. Therefore, it is necessary to adjust the numeric count of occupied cache locations according to the operation of the warehousing region in time, so as to ensure the warehousing operation.

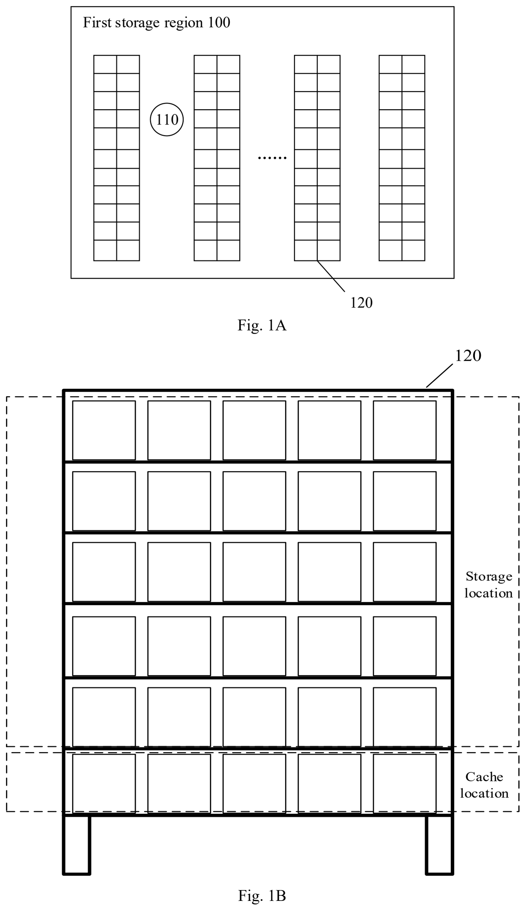

Fig. 1A is a schematic diagram of a goods unit scheduling scenario provided by some embodiments of the present disclosure. As shown in Fig. 1A, a plurality of storage racks 120 are arranged in a first storage region 100, and a first transfer device 110 works in a passage formed between two storage racks.

In some embodiments, the first storage region 100 includes the plurality of storage racks 120, the passage is formed between two adjacent rows of storage racks 120, and the first storage region may be provided with a plurality of passages. The first transfer device 110 may move in any passage of the first storage region 100 to transfer the goods box placed on the storage racks 120 at both sides of the passage. For example, the first transfer device 110 may transfer the goods box placed in the cache location of the storage rack 120 to an upper storage location, or transfer the goods box placed in the upper storage location to a lower cache location.

Fig. 1B is a schematic diagram of a storage rack provided by some embodiments of the present disclosure. As shown in Fig. 1B, the storage rack 120 is respectively provided with a plurality of storage locations and a plurality of cache locations.

In some embodiments, the cache location may be arranged at the lowest layer of the storage rack 120, and the storage location may be arranged above the cache location. Alternatively, the storage location may also be arranged on a left or right side of the cache location. The embodiments of the present disclosure do not limit the positional relationship between the cache location and the storage location. The following embodiments are illustrated by taking an example that the storage location is arranged above the cache location.

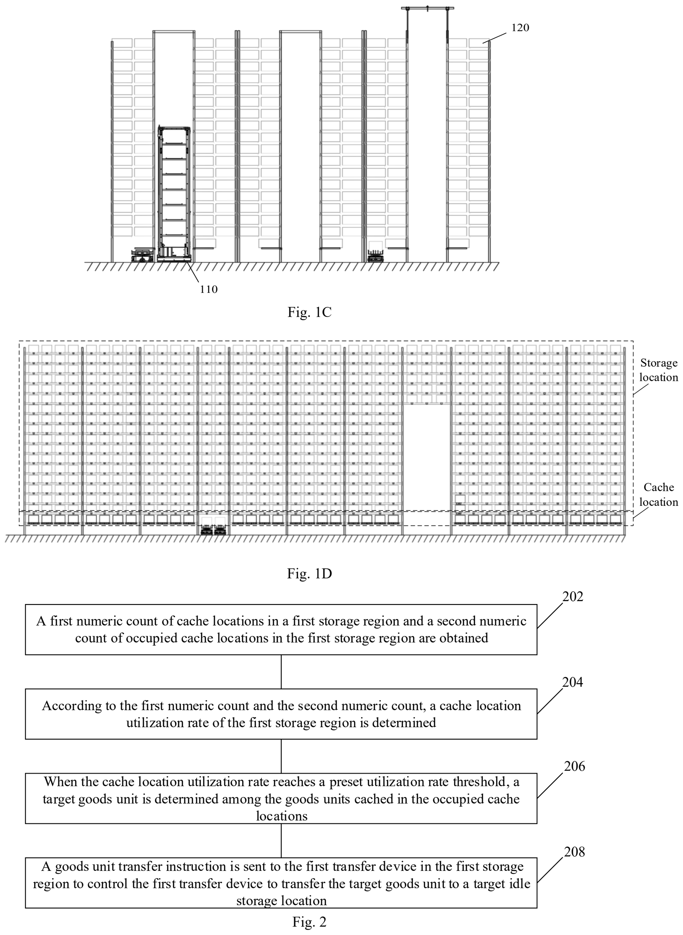

Fig. 1C is a schematic diagram of another goods unit scheduling scenario provided by some embodiments of the present disclosure. As shown in Fig. 1C, the first transfer device 110 takes goods units from the storage rack 120 or stores goods units in the storage rack 120. For example, the first transfer device 110 determines a target goods unit in the goods units (such as goods boxes) cached in the lower cache locations, and transfers the determined target goods unit to the upper storage location, in the passage defined by two storage racks 120.

Fig. 1D is a schematic diagram of another storage rack provided by some embodiments of the present disclosure. As shown in Fig. 1D, a plurality of cache locations are arranged at the lowest layer of the storage rack, and a plurality of storage locations are arranged above the cache locations.

The embodiments of the present disclosure provide a goods unit scheduling method, which obtains the total numeric count of cache locations in a first storage region and the numeric count of occupied cache locations (cache locations that have cached goods units), calculates a cache location utilization rate of the first storage region according to the numeric count of occupied cache locations and the total numeric count of cache locations in the first storage region, and then judges whether the cache location utilization rate reaches a preset utilization rate threshold. When the cache location utilization rate reaches the preset utilization rate threshold, the target goods unit cached in a target cache location that needs to be transferred to an idle storage location is determined from the occupied cache locations, and in this case, a control device sends a goods unit transfer instruction to the first transfer device, so that the first transfer device may transfer the target goods unit to the idle storage location. By dynamically adjusting the numeric count of occupied cache locations, the embodiments of the present disclosure solve the problem of invalid occupation of cache locations, improve the reuse rate of the goods unit in the cache location, further reduce the transfer action of the first transfer device, reduce the transfer cost and improve the transfer efficiency.

In the following, with reference to Fig. 2, the goods unit scheduling method provided by the embodiments of the present disclosure will be described in detail.

Fig. 2 is a schematic diagram of a goods unit scheduling method provided by some embodiments of the present disclosure. As shown in Fig. 2, the method includes the following steps.

In step 202, a first numeric count of cache locations in a first storage region and a second numeric count of occupied cache locations in the first storage region are obtained.

The first storage region includes at least one storage rack, and each storage rack is pre-provided with a plurality of cache locations and a plurality of storage locations.

In some embodiments, the storage rack 120 may be provided with a certain number of cache locations for temporarily storing goods boxes that have been removed from the storage locations and have not been transferred to a workstation, or that may also be used for storing goods boxes transferred by a robot from the workstation to an inventory region. Along with the warehousing operation, the goods boxes in the cache locations will gradually accumulate, resulting in fewer and fewer idle cache locations, so that there are no idle cache locations for caching goods boxes, which affects the transfer efficiency of the robot. Therefore, it is necessary to dynamically adjust the numeric count of cache locations.

In some embodiments, the goods unit scheduling method provided by the embodiments of the present disclosure may be applied to a control device, and the control device may be a server or a terminal, or a device deployed with a robot management system (RMS). The terminal may include at least one of a personal computer, a notebook computer, a smart phone, a tablet computer and a portable wearable device. The server may include an independent server or a server cluster composed of multiple servers, which is not limited by the embodiments of the present disclosure. For example, the control device in the embodiments of the present disclosure may be a device deployed with the RMS.

In some embodiments, the first transfer device may be a transfer device for performing a transfer task in the first storage region. For example, the first transfer device may be an intelligent mobile robot or other intelligent mobile devices with the function of picking and placing goods. For example, the first transfer device may be a container transferring robot for transferring goods and/or goods boxes.

In some embodiments, the inventory region may be divided into a plurality of storage regions, and the first storage region may be any one of the plurality of storage regions. The first storage region may include at least one storage rack, and each storage rack is pre-provided with a plurality of cache locations and a plurality of storage locations.

In some embodiments, among the plurality of cache locations in the first storage region, the cache location where the goods unit has been cached is called an occupied cache location, and the cache location where the goods unit has not been cached is called an idle cache location. Among the plurality of storage locations in the first storage region, the storage location where the goods unit has been stored is called an occupied storage location, and the storage location where the goods unit has not been stored is called an idle storage location.

In some embodiments, the goods unit may include a container, and the container may be an ordinary goods box (also called a material box) or a package of goods (also called an original box), which is not limited by the embodiments of the present disclosure. The embodiments of the present disclosure are illustrated by taking the goods box as an example of the goods unit.

In some embodiments, the first numeric count is a total numeric count of cache locations pre-arranged in the first storage region, and the second numeric count is a numeric count of occupied cache locations in the first storage region.

According to the goods unit scheduling method provided by the embodiments of the present disclosure, after the first storage region where goods units need to be scheduled is determined in the inventory region, and the numeric count of cache locations in the first storage region and the numeric count of occupied cache locations are further obtained, a cache location utilization rate of the first storage region may be determined based on the total numeric count of cache locations and the numeric count of occupied cache locations, and then the use of the cache locations may be adjusted, thereby realizing the reasonable use of the cache locations.

In step 204, according to the first numeric count and the second numeric count, a cache location utilization rate of the first storage region is determined.

In some embodiments, according to the total numeric count of cache locations in the first storage region and the numeric count of occupied cache locations, the cache location utilization rate of the first storage region may be calculated. For example, the cache location usage may be a ratio of the numeric count of occupied cache locations to the total numeric count of cache locations, that is, cache location utilization rate = second numeric count/first numeric count.

For example, there are 100 cache locations in the first storage region, among which 60 cache locations have been occupied, that is, the numeric count of occupied cache locations is 60 and the total numeric count of cache locations is 100, so the cache location utilization rate of the first storage region is 0.6.

According to the goods unit scheduling method provided by the embodiments of the present disclosure, based on the numeric count of occupied cache locations in the first storage region and the total numeric count of cache locations in the first storage region, the cache location utilization rate of the first storage region is calculated, so as to provide a basis for the subsequent reasonable adjustment of the use of the cache locations.

In step 206, when the cache location utilization rate reaches a preset utilization rate threshold, a target goods unit is determined among the goods units cached in the occupied cache locations.

For example, after determining the cache location utilization rate of the first storage region, the occupied cache locations may be adjusted according to the cache location utilization rate and the preset utilization rate threshold, so as to improve the reuse rate of the cache locations.

In some embodiments, the goods unit is a goods box stored or cached in the first storage region, and the target goods unit refers to a goods unit that is cached in the cache location and needs to be transferred to the idle storage location. The cache location where the target goods unit is located may be called a target cache location.

In some embodiments, the preset utilization rate threshold may be set for the cache location utilization rate of the first storage region, and it is judged whether the numeric count of occupied cache locations needs to be adjusted according to the cache location utilization rate threshold. For example, when the cache location utilization rate of the first storage region exceeds the preset utilization rate threshold, it is necessary to adjust the numeric count of occupied cache locations in the first storage region; when the cache location utilization rate of the first storage region does not exceed the preset utilization rate threshold, there is no need to adjust the numeric count of occupied cache locations in the first storage region.

In some embodiments, the preset utilization rate threshold may be set as a data value or as a data interval. It should be noted that the preset utilization rate threshold may be set according to requirements, which is not limited by the embodiments of the present disclosure. For example, the preset utilization rate threshold may be set to 0.7, or may also be set to a data interval of [0.7, 0.95].

For example, taking an example that the preset utilization rate threshold is 0.7, when the cache location utilization rate of the first storage region is 0.8, since the cache location utilization rate of the first storage region is greater than the preset utilization rate threshold of 0.7, the target goods unit is determined from the goods units cached in the occupied cache locations.

By adjusting the numeric count of occupied cache locations, the goods unit scheduling method provided by the embodiments of the present disclosure increases the numeric count of idle cache locations in the process of transferring goods units, and avoids the phenomenon that there are no corresponding locations to store the goods units due to insufficient cache locations, which phenomenon causes congestion of the transfer device.

In some embodiments, the cache location is used to temporarily store the goods unit, and the goods unit may be temporarily stored in the cache location no matter whether it is picked from the storage rack for transfer to the workstation, or it needs to be transferred to the storage location after use. When the goods unit stored in the cache location is a goods unit picked from the storage rack for transfer to the workstation, since the goods unit has been hit by an order and needs to be transferred to the workstation for sorting, the goods unit may no longer be transferred to the idle storage location. Therefore, it is necessary to determine the goods unit that needs to be transferred to the idle storage location among the goods units cached in the occupied cache locations and have not been hit by the order.

In some embodiments, determining the target goods unit among the goods units cached in the occupied cache locations may include: determining at least one first goods unit that has not been hit by the order among the goods units cached in the occupied cache locations; and determining the target goods unit from the at least one first goods unit.

In some embodiments, the goods units cached in the occupied cache locations may include goods units hit by the order, and/or goods units not hit by the order. The goods unit hit by the order may be a goods unit that has been hit by a first order and needs to be transferred to the workstation for a sorting task. The first order may be a group of orders within a preset time or may be a current order, which is not limited by the embodiments of the present disclosure. The goods unit not hit by the order may be a goods unit that is not hit by the first order. When the goods unit is not hit by the order, it means that the goods unit does not need to be transferred to the workstation for sorting, and thus the target goods unit may be determined among the goods units that are not hit by the order (that is, the first goods units).

For example, the first goods unit is a goods unit cached in the occupied cache location and not hit by the order, that is, the goods unit not hit by the first order. The target goods unit is the goods unit that is determined to be transferred to the idle storage location among the first goods units cached in the occupied cache locations. One or more first goods units may be provided. When one first goods unit is provided, the first goods unit may be determined as the target goods unit, and when a plurality of first goods units are provided, the target goods unit may be further determined among the plurality of first goods units.

That is, the goods units in the occupied cache locations may be first determined, and it is determined which goods units among the goods units in the occupied cache locations are goods units hit by the order, and which goods units among the goods units in the occupied cache locations are goods units not hit by the order, and the target goods unit that needs to be transferred to the idle storage location is determined from the goods units not hit by the order.

In some embodiments, determining the target goods unit among the at least one first goods unit includes: determining score information of each first goods unit; and determining the target goods unit among the first goods units with the score information less than a score threshold.

In some embodiments, determining the score information of each first goods unit includes determining at least one of a transfer weight of each first goods unit, a transfer distance between each first goods unit and the first transfer device, and popularity information of each first goods unit; and determining the score information of each first goods unit based on the at least one of the transfer weight of each first goods unit, the transfer distance between each first goods unit and the first transfer device, and the popularity information of each first goods unit.

For example, each goods unit may be scored according to the at least one of the transfer weight of each goods unit, the transfer distance between each first goods unit and the first transfer device and the popularity information of each first goods unit, and the target goods unit may be determined according to the scoring information of each goods unit. For example, the goods unit whose score information is less than the score threshold may be determined as the target goods unit.

In some embodiments, the popularity information of each first goods unit may be determined according to a numeric count of times that the first goods unit is hit by the order within a preset time. For example, the more times the first goods unit is hit by the order within the preset time, the greater the popularity information of the first goods unit. It should be noted that the popularity information of the first goods unit may also be determined in other ways, which is not limited by the embodiments of the present disclosure.

In some embodiments, determining the target goods unit among the first goods units with the score information less than the score threshold includes determining the target goods unit among the first goods units with the popularity information less than a popularity threshold.

For example, when there are a plurality of first goods units with the popularity information less than the popularity threshold, one first goods unit may be randomly determined as the target goods unit, or one first goods unit with the smallest popularity information may be determined as the target goods unit, or the target goods unit may be further determined according to the transfer weight of each goods unit and/or the transfer distance between each first goods unit and the first transfer device.

In the following, the processes of determining the target goods unit according to the transfer weight of each goods unit and the transfer distance between each first goods unit and the first transfer device will be explained, respectively.

In some embodiments, determining the target goods unit from the at least one first goods unit includes: obtaining the transfer weight of each first goods unit; and determining the target goods unit among the first goods units with the transfer weight less than a preset weight threshold.

In some embodiments, the transfer weight is used to indicate a probability that the first goods unit is hit by a second order. For example, the second order may be an order in an upcoming period. That is, the transfer weight may represent a probability that the first goods unit may be hit in the upcoming period.

In some other examples, the transfer weight of the first goods unit may also be determined based on a category of the goods stored in the first goods unit and/or an order hit status. For example, each goods unit may correspond to an initial transfer weight, and the initial transfer weight may be accumulated based on different categories of the goods stored and different order hit statuses. It should be noted that the transfer weight used to determine the target goods unit may be the accumulated transfer weight.

For example, goods 1, goods 2 and goods 3 are stored in the first goods unit S1, corresponding goods grades of goods 1, goods 2 and goods 3 are grades A, B and C respectively, and the first goods unit S1 is hit by the order. The transfer weights corresponding to the storage of the goods of grade A, the goods of grade B and the goods of grade C decrease in turn. For example, in a case of storing the goods of class A, the transfer weight of the first goods unit is increased by 3; in a case of storing the goods of class B, the transfer weight of the first goods unit is increased by 2; in a case of storing the goods of class C, the transfer weight of the first goods unit is increased by 1; and in a case that the first goods unit is hit by the order, the transfer weight of the first goods unit is increased by 1. If the initial transfer weight of the first goods unit S1 is 0, the transfer weight of the first goods unit S1 may be 7 (that is, 3+2+1+1=7).

In some embodiments, the preset weight threshold is used to measure whether the first goods unit needs to be transferred to the idle storage location. The preset weight threshold may be set according to requirements, which is not limited by the embodiments of the present disclosure.

In some embodiments, the goods units temporarily stored in the cache locations have different probabilities of being hit repeatedly due to the different goods stored, and the goods unit with a higher probability of being hit will also be taken off the storage rack with a higher frequency, thus increasing the transfer actions of the first transfer device, increasing the workload of the first transfer device and raising the transfer cost. Therefore, in the process of determining the target goods unit from the first goods units, it is necessary to combine a use frequency of the first goods unit to determine the target goods unit. The target goods unit is determined according to the use frequency of the first goods unit, so that the first goods unit with a lower use frequency may be transferred to the idle storage location.

In some embodiments, when there are a plurality of first goods units with the transfer weight less than the preset weight threshold, the target goods unit may be randomly determined, or the first goods unit with the smallest transfer weight may be determined as the target goods unit.

For example, the preset weight threshold of 10 is taken as an example for explanations. Based on the above same calculation logic for determining the transfer weight of the first goods unit S1, it is determined that the transfer weight of the first goods unit S1 is 7, the transfer weight of the first goods unit S2 is 5, the transfer weight of the first goods unit S3 is 8, the transfer weight of the first goods unit S4 is 12, and the preset weight threshold is 10. Comparing the transfer weights of the first goods units S1, S2, S3 and S4 with the preset weight threshold, it may be determined that the first goods units with the transfer weight less than the preset weight threshold are the first goods units S1, S2 and S3, and the target goods unit is determined among the first goods units S1, S2 and S3.

For example, one first goods unit may be randomly selected from the first goods units S1, S2 and S3 as the target goods unit. Thus, the first goods unit S1 may be determined as the target goods unit, or the first goods unit S2 may be determined as the target goods unit, or the first goods unit S3 may be determined as the target goods unit.

For example, in order to further reduce the transfer workload of the first transfer device and improve the transfer efficiency, the first goods unit S2 with the lowest transfer weight among the first goods units with the transfer weight less than the preset weight threshold may be determined as the target goods unit.

According to the goods unit scheduling method provided by the embodiments of the present disclosure, the transfer weight of each first goods unit is obtained, and according to the preset weight threshold, the target goods unit is determined among the first goods units with the transfer weight less than the preset weight threshold, so that the transfer workload of the first transfer device may be reduced and the transfer efficiency may be improved.

In some embodiments, determining the target goods unit from the first goods units includes calculating a transfer distance between each first goods unit and the first transfer device; and determining the target goods unit among the first goods units with the transfer distance less than a preset transfer distance threshold.

In some embodiments, when the determined target goods unit is far away from the first transfer device, it may take a long time for the first transfer device to move to the target goods unit for transfer operation, thus reducing the working efficiency of the first transfer device. Therefore, it is also possible to determine the target goods unit based on the distance between the first goods unit and the first transfer device.

For example, the transfer distance refers to an actual travel distance of the first transfer device when the first transfer device moves to the first goods unit. The preset transfer distance threshold refers to a travelable distance of the first transfer device when the first transfer device moves to the first goods unit.

In some embodiments, the transfer distance between each first goods unit and the first transfer device is calculated respectively, and the target goods unit is determined among the first goods units whose transfer distances are less than the preset transfer distance threshold based on the preset transfer distance threshold.

For example, the transfer distance between the first goods unit and the first transfer device may be identified by a laser radar installed at a bottom of the first transfer device, or the transfer distance may be calculated by the control device and fed back to the first transfer device. The embodiments of the present disclosure do not limit the way to determine the transfer distance between the first goods unit and the first transfer device.

In some embodiments, when there are a plurality of first goods units whose transfer distances are less than the preset transfer distance threshold, the target goods unit may be randomly determined, or the first goods unit with the smallest transfer distance may be determined as the target goods unit.

In some embodiments, taking the preset transfer distance threshold of 10 meters as an example, it is determined that the transfer distance between the first goods unit S5 and the first transfer device is 7 meters, the transfer distance between the first goods unit S6 and the first transfer device is 3 meters, the transfer distance between the first goods unit S7 and the first transfer device is 6 meters, the transfer distance between the first goods unit S8 and the first transfer device is 11 meters, and the preset transfer distance threshold is 10 meters. Comparing the transfer distances between the first goods units S5, S6, S7 and S8 and the first transfer device with the preset transfer distance threshold, it may be determined that the first goods units whose transfer distances are less than the preset transfer distance threshold are S5, S6 and S7, and the target goods unit is determined among the first goods units S5, S6 and S7.

For example, one first goods unit may be randomly selected from the first goods units S5, S6 and S7 as the target goods unit. For example, the first goods unit S5 may be determined as the target goods unit, or the first goods unit S6 may be determined as the target goods unit, or the first goods unit S7 may be determined as the target goods unit.

For another example, in order to further reduce the working time of the first transfer device and improve the transfer efficiency, the first goods unit S6 with the shortest transfer distance among the first goods units with the transfer distance less than the preset transfer distance threshold may be directly determined as the target goods unit.

It should be noted that, in addition to the above implementations, the target goods unit may be determined by comprehensive consideration of the transfer distance and the transfer weight of the first goods unit. The way to determine the target goods unit may be selected and determined according to the actual business application scenario, which is not limited by the present disclosure.

For example, the transfer distance and the transfer weight of the first goods unit may be determined, and the first goods unit with the lowest transfer weight is selected as the target goods unit among the first goods units whose transfer distances are less than the preset transfer distance threshold. If there is no first goods unit with the transfer weight less than the preset weight threshold among the first goods units whose transfer distances are less than the preset transfer distance threshold, the target goods unit may be randomly determined among the first goods units with the transfer distance less than the preset transfer distance threshold, or the first goods unit with the shortest transfer distance may be determined as the target goods unit. Alternatively, among the first goods units with the transfer weight less than the preset weight threshold, the first goods unit with the shortest transfer distance is selected as the target goods unit.

According to the goods unit scheduling method provided by the embodiments of the present disclosure, the target goods unit is determined among the first goods units according to the popularity information of the first goods unit, the transfer weight of the first goods unit and/or the transfer distance between the first goods unit and the first transfer device, so that the transfer action of the first transfer device may be reduced, the working time of the first transfer device may be reduced, and the working efficiency of the first transfer device may be improved.

In step 208, a goods unit transfer instruction is sent to the first transfer device in the first storage region to control the first transfer device to transfer the target goods unit to a target idle storage location.

The goods unit scheduling method provided by the embodiments of the present disclosure is applied to the control device. No matter whether the control device is placed in the first transfer device or independently placed outside the first transfer device, after the target goods unit is determined, the goods unit transfer instruction needs to be sent to the first transfer device to drive the first transfer device to transfer the target goods unit to the idle storage location.

In some embodiments, step 208 includes: determining the target idle storage location among at least one idle storage location in the first storage region; generating the goods unit transfer instruction according to position information of the target idle storage location; and sending the goods unit transfer instruction to the first transfer device, to cause the first transfer device to transfer the target goods unit to the target idle storage location.

In some embodiments, the goods unit transfer instruction is an instruction to drive the first transfer device to transfer the target goods unit to the target idle storage location. The idle storage location is a storage location where no goods unit is stored, and the target idle storage location is an idle storage location for placing the target goods unit.

In some embodiments, determining the target idle storage location among the at least one idle storage location of the first storage region includes randomly determining the target idle storage location among the at least one idle storage location; or, determining the target idle storage location based on a distance between each idle storage location and the first transfer device.

In some embodiments, before controlling the first transfer device to transfer the target goods unit to the target idle storage location, it is necessary to determine the target idle storage location among the idle storage locations of the first storage region, so that the first transfer device may transfer the target goods unit to the target idle storage location. The target idle storage location refers to an idle storage location determined among the idle storage locations and used for storing the target goods unit.

For example, the target idle storage location for storing the target goods unit may be randomly determined from the at least one idle storage location in the first storage region, or the target idle storage location for storing the target goods unit may be determined based on the distance between each idle storage location and the first transfer device. After determining the target idle storage location, the position information of the target idle storage location is carried in the goods unit transfer instruction, and the goods unit transfer instruction is sent to the first transfer device, so that the first transfer device may transfer the target goods unit to the target idle storage location.

In some embodiments, randomly determining the target idle storage location among the idle storage locations may mean selecting any one of the idle storage locations as the target idle storage location. By means of random determination, the calculation resources and time for determining the target idle storage location may be saved.

In some embodiments, in order to further improve the transfer efficiency of the first transfer device, the target idle storage location may also be determined according to the distance between each idle storage location and the first transfer device. For example, the distance between each idle storage location and the first transfer device may be calculated, and the target idle storage location may be determined among the idle storage locations that are relatively close to the first transfer device. For example, the idle storage location closest to the first transfer device may be determined as the target idle storage location.

In some embodiments, determining the target idle storage location among the at least one idle storage location in the first storage region may further include: if there are idle storage locations, which are in the same column as the target cache location where the target goods unit is, among the at least one idle storage location in the first storage region, determining the target idle storage location among the idle storage locations in the same column as the target cache location; and if there are no idle storage locations, which are in the same column as the target cache location, among the at least one idle storage location in the first storage region, determining the target idle storage location among the at least one idle storage location in the first storage region based on the position information of the target cache location.

In some embodiments, there may be or may not be idle storage locations among the storage locations in the same column as the target cache location. The storage locations located in the same column as the target cache location may be located in the same storage rack as the target cache location.

In some embodiments, when there is at least one idle storage location among the storage locations in the same column as the target cache location, the target idle storage location may be determined among the at least one idle storage location.

In some embodiments, when there is one idle storage location among the storage locations in the same column as the target cache location, this idle storage location may be determined as the target idle storage location; when there are a plurality of idle storage locations among the storage locations in the same column as the target cache location, the target idle storage location may be randomly determined from the plurality of idle storage locations, or the idle storage location closest to the target cache location may be determined as the target idle storage location. The embodiments of the present disclosure do not limit the way to determine the target idle storage location.

In some embodiments, when there are no idle storage locations among the storage locations in the same column as the target cache location, a horizontal distance between each idle storage location and the target cache location may be determined based on the position information of the target cache location, and the target idle storage location is determined based on the idle storage location having the shortest horizontal distance from the target cache location among the at least one idle storage location.

In some embodiments, a distance between each idle storage location and the target cache location is determined respectively, such as the horizontal distance, and one idle storage location having the shortest horizontal distance from the target cache location is determined as the target idle storage location.

In some embodiments, when there is one idle storage location having the shortest horizontal distance from the target cache location, this idle storage location may be determined as the target idle storage location; and when there are a plurality of idle storage locations having the shortest horizontal distance from the target cache location, the idle storage location having the shortest vertical distance from the target cache location among the plurality of idle storage locations is determined as the target idle storage location. That is, the idle storage location having both the shortest horizontal distance and the shortest vertical distance from the target cache location may be determined as the target idle storage location.

In some embodiments, sending the goods unit transfer instruction to the first transfer device in the first storage region includes: determining a first target idle storage location among idle storage locations above the target cache location; carrying position information of the first target idle storage location in the goods unit transfer instruction, and sending the goods unit transfer instruction to the first transfer device, to cause the first transfer device to transfer the target goods unit to the first target idle storage location.

In some embodiments, the target idle storage location may be determined among the idle storage locations above the target cache location, and further determined as the first target idle storage location. After determining the first target idle storage location, the position information of the first target idle storage location is carried in the goods unit transfer instruction, and the goods unit transfer instruction is sent to the first transfer device, so that the first transfer device may transfer the target goods unit to the first target idle storage location.

For example, there are two idle storage locations above the target cache location, and any one of the two idle storage locations may be selected as the target storage location, or the target idle storage location may be determined according to the type of goods stored in the target goods unit that needs to be stored (if the type of goods is class A, the target goods unit may be stored in a lower storage location among the two idle storage locations; if the type of goods is class B or class C, the target goods unit may be stored in an upper storage location among the two idle storage locations), or it is also possible to directly determine the idle storage location closest to the first transfer device as the target idle storage location.

According to the goods unit scheduling method provided by the embodiments of the present disclosure, by determining the first target idle storage location among the idle storage locations above the target cache location, the transfer time of the first transfer device may be saved, the processing period of the first transfer device may be shortened, and the transfer efficiency of the first transfer device may be improved.

When there is no idle storage location above the target cache location, it is necessary to further determine the target idle storage location for the target goods unit.

In some embodiments, the method further includes: determining a second target idle storage location based on position information of the first transfer device and position information of the target cache location when the first target idle storage location does not exist; carrying position information of the second target idle storage location in the goods unit transfer instruction, and sending the goods unit transfer instruction to the first transfer device, to cause the first transfer device to transfer the target goods unit to the second target idle storage location.

In some embodiments, the second target idle storage location refers to an idle storage location on a left or right side of the occupied storage location located above the target cache location. When there is no idle storage location above the target cache location, the second target idle storage location may be determined among the idle storage locations based on the position information of the target cache location and the position information of the first transfer device. After determining the second target idle storage location, the position information of the second target idle storage location is carried in the goods unit transfer instruction, and the goods unit transfer instruction is sent to the first transfer device, so that the first transfer device may transfer the target goods unit to the second target idle storage location.

In some embodiments, if there is no idle storage location above the target cache location, the idle storage locations closest to the target cache location may be determined based on the position information of the target cache location, and then the second target idle storage location may be determined among the idle storage locations according to the position information of the first transfer device.

For example, there is no idle storage location above the target cache location, but there are idle storage locations in a storage rack on a right side of the target cache location, then the second target idle storage location may be determined among the idle storage locations on the right side of the target cache location. In order to further improve the transfer efficiency of the first transfer device, the lowest idle storage location among the idle storage locations on the right side of the target cache location may be determined as the second target idle storage location.

For example, if there are idle storage locations on both sides of the target cache location, it may be determined on which side of the target cache location to determine the target idle storage location according to the position information of the first transfer device. For example, there is no idle storage location above the target cache location, but there are idle storage locations in the storage racks on both sides of the target cache location. If the first transfer device is located on the left side of the target cache location, the second target idle storage location may be determined among the idle storage locations on the left side of the target cache location. According to the position information of the first transfer device, the second target idle storage location may be determined, which may save the time for the first transfer device to move to the second target idle storage location, and further shorten the processing period of the first transfer device.

According to the goods unit scheduling method provided by the embodiments of the present disclosure, the target idle storage location is determined according to the position information of the target cache location and/or the position information of the first transfer device, and the position information of the target idle storage location is carried in the goods unit transfer instruction after the position information of the target idle storage location is determined, so that the first transfer device may be driven to transfer the target goods unit to the target idle storage location. The moving time of the first transfer device to the target idle storage location is saved, the processing period of the first transfer device is shortened, and the working efficiency of the first transfer device is improved.

In some embodiments, determining the target idle storage location among the at least one idle storage location in the first storage region further includes: determining a storage weight of each idle storage location according to position information of each idle storage location of the at least one idle storage location; and determining the target idle storage location among the at least one idle storage location according to the popularity information of the target goods unit and the storage weight of each idle storage location.

In some embodiments, the storage weight of each idle storage location may also be determined according to the position information of each idle storage location. For example, a target distance between each idle storage location and each workstation may be determined based on the position information of each idle storage location and position information of each workstation in a warehousing system, and the storage weight of each idle storage location may be determined according to the target distance between each idle storage location and each workstation. The storage weight of the idle storage location is used to indicate a priority of the idle storage location storing goods units. It should be noted that the implementation of determining the storage weight of each idle storage location according to the position information of each idle storage location may refer to the relevant content of determining the storage weight of each storage location based on the position information of each storage location in the following embodiment.

After determining the storage weight of each idle storage location, the target idle storage location may be further determined among the at least one idle storage location according to the popularity information of the target goods unit and the storage weight of each idle storage location. For example, the higher the popularity of the target goods unit is, the more frequently the target goods unit is transferred. Thus, the target goods unit with a higher popularity may be placed on the idle storage location with a greater storage weight, that is, the idle storage location with the greater storage weight may be determined as the target idle storage location. For another example, the lower the popularity of the target goods unit is, the less frequently the target goods unit is transferred. Thus, the target goods unit with a lower popularity may be placed on the idle storage location with a smaller storage weight, that is, the idle storage location with the smaller storage weight may be determined as the target idle storage location.

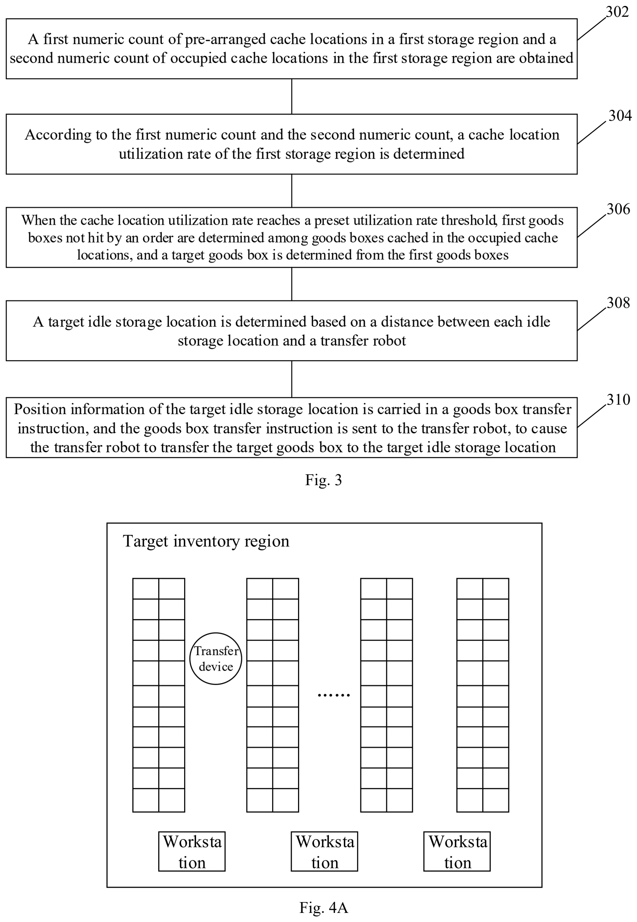

Fig. 3 is a schematic diagram of another goods unit scheduling method provided by some embodiments of the present disclosure. In the following, with reference to Fig. 3, taking the application of the goods unit scheduling method provided by the present disclosure in a goods box transfer scenario as an example, the goods unit scheduling method is further explained. As shown in Fig. 3, the method includes the following steps.

In step 302, a first numeric count of pre-arranged cache locations in a first storage region and a second numeric count of occupied cache locations in the first storage region are obtained.

In step 304, according to the first numeric count and the second numeric count, a cache location utilization rate of the first storage region is determined.

In step 306, when the cache location utilization rate reaches a preset utilization rate threshold, first goods boxes not hit by an order are determined among goods boxes cached in the occupied cache locations, and a target goods box is determined from the first goods boxes.

In step 308, a target idle storage location is determined based on a distance between each idle storage location and a transfer robot.

In step 310, position information of the target idle storage location is carried in a goods box transfer instruction, and the goods box transfer instruction is sent to the transfer robot, to cause the transfer robot to transfer the target goods box to the target idle storage location.

By adjusting the numeric count of occupied cache locations, the goods unit scheduling method provided by the embodiment of the present disclosure solves the problem of invalid occupation of cache locations, improves the reuse rate of goods units in cache locations, and further reduces the transfer action of the first transfer device, reduces the transfer cost and improves the transfer efficiency.

In some embodiments, in the process of the transfer device scheduling the goods units in the storage region, with the operation of the warehouse, new order tasks will be assigned to respective storage regions. However, since the numeric count of tasks assigned to each storage region is different, the transfer device in each storage region cannot receive all the assigned order tasks. In order to ensure the operation efficiency of different storage regions, it is necessary to identify different order tasks to determine whether to assign the order tasks to the transfer device in the storage region.

In some embodiments, the goods unit scheduling method further includes: in response to a task assignment request corresponding to the first storage region, determining a second goods unit corresponding to the task assignment request in the first storage region; determining a numeric count of tasks to be completed in the first storage region based on a numeric count of the second goods unit; and assigning a task to be assigned carried in the task assignment request to the first transfer device, when the numeric count of tasks to be completed in the first storage region does not reach a first preset task threshold.

The task assignment request is a request used to assign an order task to each storage region. The second goods unit is a goods unit in the first storage region hit by an order corresponding to the task assignment request. The second goods unit may be a goods unit stored in an occupied storage location in the first storage region or a goods unit cached in an occupied cache location in the first storage region.

In some embodiments, the numeric count of tasks to be completed is a numeric count of uncompleted tasks in the first storage region. The first preset task threshold refers to an upper limit of the numeric count of uncompleted tasks in the first storage region. The task to be assigned refers to a task that has not been assigned to the storage region, and the task to be assigned is carried in the task assignment request.

In some embodiments, after receiving the task assignment request for the first storage region, a control device determines the second goods unit hit by the order in the first storage region in response to the task assignment request, and determines the numeric count of tasks to be completed in the first storage region according to a numeric count of the second goods units. Further, according to the first preset task threshold, it is determined whether the tasks to be completed in the first storage region have reached the upper limit of the numeric count of uncompleted tasks. If the numeric count of tasks to be completed in the first storage region does not reach the upper limit, the task to be assigned carried in the task assignment request is assigned to the first transfer device in the first storage region.

For example, it is determined that the numeric count of tasks to be completed in the first storage region is 50 and the first preset task threshold is 70. Since the numeric count of tasks to be completed in the first storage region does not reach the first preset task threshold, the task to be assigned may be assigned to the first transfer device.

In some embodiments, when the numeric count of tasks to be completed in the first storage region reaches the first preset task threshold, a goods identifier carried in the task assignment request is determined; based on the goods identifier, the task to be assigned carried in the task assignment request is assigned to a second transfer device in a second storage region, and the second transfer device is controlled to execute the task to be assigned in the second storage region.

For example, the second storage region is a storage region where the goods unit corresponding to the goods identifier is stored. The goods identifier may be an actual stock keeping unit (SKU) corresponding to goods, or a goods serial number set for different goods. Each goods has its own unique goods identifier, and the goods identifier may be used to accurately determine the corresponding goods.

In some embodiments, if the numeric count of tasks to be completed in the first storage region reaches the first preset task threshold, it indicates that the numeric count of tasks to be completed in the first storage region has reached the upper limit of the numeric count of uncompleted tasks in the first storage region, and then assigning new tasks to the first storage region may cause task congestion in the first storage region, resulting in that the first transfer device cannot handle both tasks. Based on this, the task to be assigned may be assigned to the transfer device in another storage region to complete, so as to realize the task balance of different storage regions and also realize the task balance of transfer devices in different storage regions.

In some embodiments, the second storage region is another storage region except the first storage region, where the goods or goods unit corresponding to the goods identifier in the task to be assigned is stored, and the numeric count of tasks to be completed in the second storage region does not reach the first preset task threshold. The second transfer device refers to the transfer device located in the second storage region to perform tasks. For example, when the numeric count of tasks to be completed in the first storage region reaches the first preset task threshold, the goods identifier in the task assignment request is determined, the task to be assigned carried in the task assignment request is assigned to the second transfer device in the second storage region where the goods or goods unit corresponding to the goods identifier is stored according to the determined goods identifier, and the second transfer device executes the task to be assigned in the second storage region.

For example, if the numeric count of tasks to be completed in the first storage region is 72 and the first preset task threshold is 70, it may be determined that the numeric count of tasks to be completed in the first storage region has reached the first preset task threshold, and then the goods identifier in the task assignment request is determined. If the goods identifier is determined as SKU1, based on the goods identifier SKU1, the second storage region where the goods or goods unit corresponding to the goods identifier SKU1 is stored is determined among the storage regions except the first storage region where the numeric count of tasks to be completed has not reached the first preset task threshold.

According to the goods unit scheduling method provided by the embodiment of the present disclosure, an upper limit of the numeric count of tasks to be completed is set for the storage region, and when the numeric count of tasks to be completed in the first storage region reaches the first preset task threshold, the task to be assigned is assigned to the second transfer device in the second storage region, so that the task scheduling of different storage regions is realized, and the task balance of different storage regions is further realized.

In some embodiments, after determining the goods identifier carried in the task assignment request, the method further includes assigning a target task corresponding to a target goods identifier to the first transfer device in a case that the target goods identifier is determined, where the target goods identifier is matched with the first storage region.

The target goods identifier refers to a goods identifier matching the first storage region, and the target goods corresponding to the target goods identifier may only be stored in the first storage region.

In some embodiments, there may be a case that all goods units corresponding to a certain goods identifier are stored in the same storage region. In this case, no matter whether the numeric count of tasks to be completed in the first storage region reaches the first preset task threshold, it is necessary to assign the task to be assigned corresponding to the goods identifier in the task assignment request to the first transfer device in the first storage region.

In some embodiments, after determining the goods identifier in the task assignment request, it is determined that the goods identifier in the task assignment request includes the target goods identifier, and the target goods corresponding to the target goods identifier is only stored in the first storage region. Therefore, regardless of whether the numeric count of tasks to be completed in the first storage region reaches the first preset task threshold, it is necessary to assign the target task corresponding to the target goods identifier to the first transfer device in the first storage region.

For example, when it is determined that the goods identifier in the task assignment request includes SKU2 and the goods corresponding to SKU2 is only stored in the first storage region, the task to be assigned corresponding to SKU2 is assigned to the first transfer device in the first storage region.

According to the goods unit scheduling method provided by the embodiment of the present disclosure, by determining the goods identifier in the task assignment request, the storage region where the goods corresponding to the goods identifier is stored is further determined, and based on the numeric counts of tasks to be completed in different storage regions, the transfer device in the storage region to which the task to be assigned carried in the task assignment request needs to be assigned is finally determined. Thus, the task balance of different storage regions is realized.

In some embodiments, there are often too many tasks assigned to the storage region, which leads to task congestion, and the task congestion will lead to a busy state of the transfer device in the storage region, while the transfer device in the storage region with fewer tasks will be idle, thus resulting in the task unbalance of the transfer devices.

In some embodiments, the method further includes: in a case that the first storage region is under task congestion, assigning the tasks to be completed in the first storage region.

For example, when it is determined that the first storage region is under task congestion, the tasks to be completed in the first storage region may be assigned to transfer devices in other storage regions, thereby reducing the numeric count of tasks to be completed in the first storage region and reducing the task workload of the first transfer device.

In some embodiments, the task congestion is often caused by too many tasks to be completed in the storage region, so the tasks may be assigned to transfer devices in other storage regions based on the numeric count of tasks to be completed in the storage region.

In some embodiments, when the numeric count of tasks to be completed in the first storage region is greater than a second preset task threshold, a task to be assigned is determined among the tasks to be completed based on the numeric count of tasks to be completed and the second preset task threshold; the task to be assigned is assigned to a third transfer device in a third storage region, and the third transfer device is controlled to execute the task to be assigned in the first storage region; and the third storage region is a storage region adjacent to the first storage region.

The second preset task threshold may be the upper limit of the numeric count of tasks to be completed corresponding to the first storage region in a non-task congestion state. The task to be assigned refers to a task that needs to be assigned to another storage region among the tasks to be completed. The third storage region refers to any storage region in a non-task congestion state, for example, a storage region close (e.g., closest) to the first storage region. The third transfer device refers to a transfer device for performing tasks in the third storage region.

In some embodiments, before assigning the tasks to be completed in the first storage region, it is necessary to determine the tasks to be completed in the first storage region. If the numeric count of tasks to be completed is greater than the second preset task threshold, the task to be assigned that needs to be assigned to the third transfer device in the third storage region is determined among the tasks to be completed according to the numeric count of tasks to be completed and the second preset task threshold, and the task to be assigned is assigned to the third transfer device in the third storage region.

For example, if the numeric count of tasks to be completed in the first storage region is determined to be 100 and the second preset task threshold value is 70, it may be determined that the tasks to be completed in the first storage region need to be assigned to the third transfer device in the third storage region in the non-task congestion state. According to the fact that the numeric count of tasks to be completed in the first storage region is 100 and the second preset task threshold is 70, a numeric count of tasks to be assigned is determined to be 100-70=30. Therefore, 30 tasks to be completed in the first storage region are determined as tasks to be assigned, and these 30 tasks to be assigned are assigned to the third transfer device in the third storage region. For example, the third transfer device may move into the first storage region to perform these 30 tasks to be assigned.

In some embodiments, when there are two transfer devices performing transfer tasks in the same passage in a storage region (such as the first storage region), the passage may be divided. For example, the passage may be divided into two regions (such as a first region and a second region). One transfer device is located in the first region to perform transfer tasks, and the other transfer device is located in the second region to perform transfer tasks, thus avoiding the collision of the two transfer devices in the passage.

According to the goods unit scheduling method provided by the embodiment of the present disclosure, when the first storage region is under task congestion, the task to be assigned of the first storage region is determined based on the tasks to be completed in the first storage region and the second preset task threshold, and the task to be assigned is assigned to the third transfer device, so that the task assignment balance between storage regions may be realized, and the task assignment balance between transfer devices may also be realized.

In addition to the task congestion caused by too many tasks to be completed in the storage region, when there is no transfer device in the storage region to perform tasks, it will also cause task congestion in the storage region.

In some embodiments, when a time since the first transfer device has left the first storage region reaches a preset time threshold, the tasks to be completed in the first storage region are assigned to the third transfer device in the third storage region, and the third transfer device is controlled to perform the tasks to be completed in the first storage region. The third storage region is a storage region adjacent to the first storage region.

In some embodiments, the preset time threshold refers to an upper limit of the time since the transfer device has left the corresponding storage region. The preset time threshold may be determined according to the actual application. For example, the preset time threshold may be set to 30 minutes, 40 minutes, 60 minutes, etc., which is not limited by the embodiment of the present disclosure. The situation that the first transfer device leaves the first storage region may include, but is not limited to, the situation of charging or damage.

In some embodiments, when it is determined that the time since the first transfer device has left the first storage region reaches the preset time threshold, it may be determined that the first storage region is in a task congestion state. In order to ensure that the tasks in the first storage region may be performed normally and ensure the performing efficiency, the tasks to be completed in the first storage region are assigned to the transfer device in the storage region adjacent to the first storage region to be performed.

For example, when the first transfer device leaves the first storage region for 30 minutes, 40 minutes or 60 minutes, the tasks to be completed in the first storage region may be assigned to the third transfer device in the adjacent third storage region to be performed. For example, the third transfer device may move into the first storage region to perform the tasks to be completed.

In some embodiments, the goods unit scheduling method further includes: assigning the tasks to be completed in the first storage region to the first transfer device in a case that the first transfer device returns to the first storage region.

In some embodiments, when the first transfer device leaves the first storage region and returns to the first storage region after a period, the first transfer device is in an idle state, so it may continue to perform tasks. In order not to interfere with the normal operation of other storage regions, the tasks to be completed in the first storage region may be assigned to the first transfer device. It should be noted that the return of the first transfer device to the first storage region may be the return of the first transfer device to the first storage region after completing charging, or the return of the first transfer device to the first storage region after damage maintenance, which is not limited by the embodiment of the present disclosure.

According to the goods unit scheduling method provided by the embodiment of the present disclosure, the tasks in different storage regions are assigned and distributed, so that the task balance between storage regions and the task balance between transfer devices is realized.

The goods unit scheduling method provided by the embodiment of the present disclosure determines whether to assign tasks to the first transfer device in the first storage region based on the first preset task threshold and the numeric count of tasks to be completed in the first storage region, so as to realize task balance between storage regions; based on the second preset task threshold and the numeric count of tasks to be completed in the first storage region, realizes the task scheduling for the first transfer device in the first storage region, when the first storage region is under task congestion, thus solving the problems of task congestion in the first storage region and task unbalance of the first transfer device.

In some embodiments, a storage position of a goods unit (such as a goods box) that is frequently used in the warehousing system will affect the transfer efficiency of the robot (or other intelligent mobile devices). For example, when the goods unit is stored far away from the workstation, it will increase the driving distance of the robot, thus reducing the transfer efficiency of the robot. For another example, if the frequently used goods units are stored in a concentrated way, it may lead to the possibility that the robot will be congested during the driving process, thus reducing the transfer efficiency of the robot.

The goods unit scheduling method provided by the embodiments of the present disclosure may not only adjust the numeric count of occupied cache locations when the cache location utilization rate is high, so as to solve the problem of invalid occupation of cache locations, but also determine the optimal storage location for the goods unit to be put into storage by determining the storage weight of each storage location, thereby improving the transfer efficiency of the robot. It should be noted that in practical applications, there is no direct correlation between the scheme of adjusting the numeric count of occupied cache locations in the above embodiments and the scheme of determining the optimal storage location for the goods unit to be put into storage in the following embodiment, and the two schemes may be used independently or in combination.

Fig. 4A is a schematic diagram of another goods unit scheduling scenario provided by some embodiments of the present disclosure. As shown in Fig. 4A, in a target inventory region, a plurality of workstations and a plurality of storage racks are arranged, each storage rack is provided with a plurality of storage locations, and a passage is formed between the storage racks for a transfer device to operate. During the operation of the transfer device, the unreasonable distribution of goods units often leads to the low efficiency of the transfer device. Therefore, the reasonable inventory distribution of goods has become an urgent problem.

According to the goods unit scheduling methods provided by the embodiment of the present disclosure, a storage weight of each storage location on the storage rack may be calculated, and the corresponding storage location may be determined for each goods unit in combination with the popularity information of each goods unit, so that the reasonable distribution of the goods units may be realized, and the working efficiency of the transfer device may also be improved.

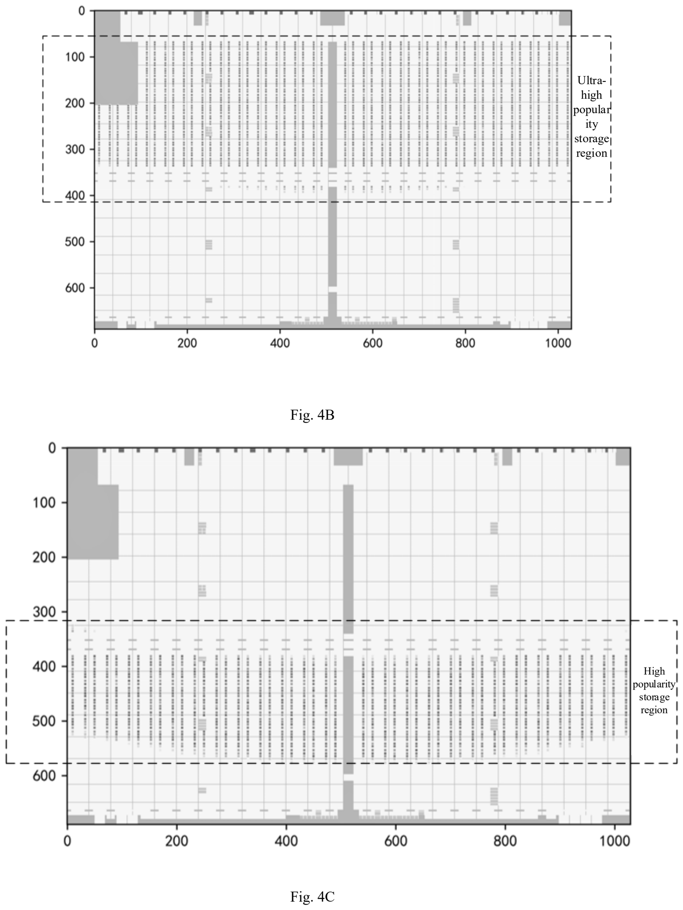

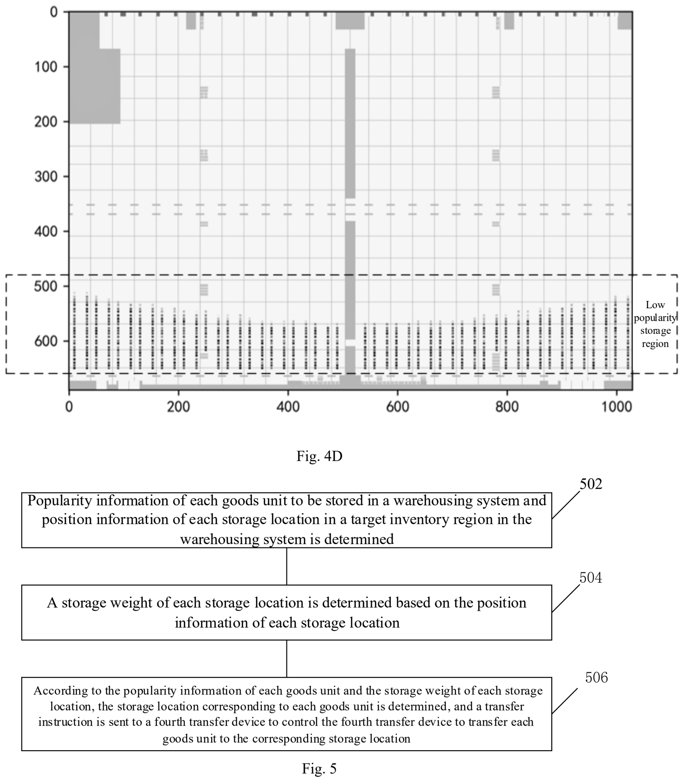

Fig. 4B, Fig. 4C and Fig. 4D are schematic diagrams of goods unit storage scenarios provided by an embodiment of the present disclosure. The description is made by taking an example that the goods units are divided into an ultra-high popularity goods unit, a high popularity goods unit and a low popularity goods unit according to the popularity information of the goods units.

Fig. 4B illustrates a distribution and storage situation of ultra-high popularity goods units based on the popularity information of goods units and the storage weights of storage locations; Fig. 4C illustrates a distribution and storage situation of high popularity goods units based on the popularity information of goods units and the storage weights of storage locations; and Fig. 4D illustrates a distribution and storage situation of low popularity goods units based on the popularity information of goods units and the storage weights of storage locations.

Fig. 5 is a schematic diagram of another goods unit scheduling method provided by some embodiments of the present disclosure. In the following, with reference to Fig. 5, the process of determining the storage location corresponding to each goods unit in the inbound scenario will be described. As shown in Fig. 5, the method further includes the following steps.

In step 502, popularity information of each goods unit to be stored in a warehousing system and position information of each storage location in a target inventory region in the warehousing system is determined.

For different inventory regions (or warehousing regions) in the warehousing system, tasks such as transfer, storage and sort of goods units (or goods boxes) will be involved. For how to store goods boxes in the inventory region, it is necessary to plan the storage locations in the region in advance, so that the goods boxes may be stored in the corresponding storage locations.

In some embodiments, the inventory distribution of goods boxes may be reasonably planned according to the popularity information of goods boxes to be stored (or put into storage) and the position information of each storage location in the target inventory region, so as to improve the working efficiency of the transfer device. The goods unit refers to a goods box that needs to be stored. The popularity information of the goods unit may refer to popularity information of the goods box, and the target inventory region refers to an inventory region for planning the inventory distribution of goods units.

For example, after it is determined that the target inventory region needs to perform the inventory distribution of goods units, it is necessary to obtain the popularity information of each goods unit and the position information of each storage location in the target inventory region, so as to determine the inventory distribution of the goods units in the storage locations according to the popularity information of each goods unit and the position information of each storage location in the subsequent process.

In some embodiments, one goods box may store multiple stock keeping units (SKUs) of goods. When the goods are dispatched from the warehouse, they are often dispatched from the warehouse in SKU units. In order to improve the accuracy of determining the popularity information of goods units, it may be determined according to popularity information of each goods stored in each goods unit (that is, goods popularity information of goods in SKU units).

In some embodiments, determining the popularity information of each goods unit to be stored in the warehousing system includes: determining the goods popularity information of the goods stored in each goods unit; and determining the popularity information of each goods unit based on the goods popularity information of the goods stored in each goods unit.

The goods popularity information is used to indicate the goods popularity information of each goods stored in the goods unit. First, the goods popularity information of each goods stored in each goods unit is obtained, and then the popularity information of each goods unit is determined according to the goods popularity information of each goods.

In some embodiments, after obtaining the goods popularity information of each goods in the goods unit, the goods popularity information of respective goods may be ranked in a descending order, and the highest goods popularity information may be determined as the popularity information of the goods unit; alternatively, after obtaining the goods popularity information of each goods in the goods unit, a corresponding weight coefficient is set for each goods based on the level of the goods popularity information, weighting calculation is performed according to the goods popularity information of each goods and the weight coefficient corresponding to the goods popularity information, and the weighted goods popularity information is determined as the popularity information of the goods unit; alternatively, after obtaining the goods popularity information of each goods in the goods unit, average goods popularity information of the goods popularity information of respective goods may be calculated, and the average goods popularity information may be determined as the popularity information of the goods unit; alternatively, after obtaining the goods popularity information of each goods in the goods unit, the goods popularity information of respective goods is added up, and the sum of the goods popularity information is determined as the popularity information of the goods unit.

It should be noted that the popularity information of each goods unit may be determined based on any one of the above methods, and the embodiment of the present disclosure does not limit the way to determine the popularity information of each goods unit.

In some embodiments, when the goods stored in the goods unit only contains goods of one SKU, the goods popularity information of the goods of this SKU may be directly determined as the popularity information of the goods unit.

In some embodiments, the goods popularity information of the goods may be determined according to order data corresponding to the goods. The order data may include data of an order being processed for outbound delivery or historical order data. For example, for the goods that have not generated order data within a preset period (such as an adjacent period), the forecast may be made according to the historical order data of the goods, and the corresponding goods popularity information of the goods may be determined based on the forecast result.

The goods unit scheduling methods provided by the embodiment of the present disclosure may further determine the popularity information of the goods units according to the goods popularity information of the goods stored in the goods units, so that in the subsequent process, the storage locations corresponding to different goods units may be determined based on the popularity information of the goods units.

In step 504, a storage weight of each storage location is determined based on the position information of each storage location.

In some embodiments, the storage weight of each storage location may be determined based on the position information of each storage location in the target inventory region, and then the storage location corresponding to each goods unit may be matched according to the storage weight of each storage location, that is, the inventory distribution of goods units is realized. The storage weight of each storage location is used to indicate a storage priority of each storage location for storing goods units, which is the basis for determining the storage location corresponding to each goods unit.

For example, the position information of each storage location may be a specific position of each storage location in the target inventory region, such as a goods shelf number, a layer number, and a storage location number. Alternatively, the position information of each storage location may be coordinate position information corresponding to each storage location. For example, the coordinate position information may be rectangular coordinate information in a rectangular coordinate system or coordinate information in a world coordinate system. It should be noted that the representation of the position information of each storage location may be determined according to the actual situation, which is not limited by the embodiment of the present disclosure.

In some embodiments, the above step 504 includes: obtaining position information of each workstation in the warehousing system; determining a target distance between the target storage location and each workstation based on the position information of the target storage location and the position information of each workstation; and determining the storage weight of the target storage location according to the target distance between the target storage location and each workstation.

In some embodiments, determining the storage weight of the target storage location according to the target distance between the target storage location and each workstation includes: determining a sum of the target distances according to the target distance between the target storage location and each workstation; and determining the storage weight of the target storage location according to the sum of the target distances.

The target storage location is any storage location in the target inventory region.

In some embodiments, the corresponding matching of the goods units and storage locations in the target inventory region is to improve the working efficiency of the transfer device (such as a robot or an intelligent transfer device, the following embodiment is illustrated by taking the robot as an example) that performs warehousing operations in the target inventory region. The transfer device may transfer the goods units from the workstations to the storage locations in the target inventory region for inbound delivery, or transfer the goods units from the storage locations in the target inventory region to the workstations for sort and other operations. Therefore, the distance between the storage location for the goods unit and the workstation may affect the transfer efficiency of the robot, and the storage weight of each storage location may be determined according to the distance between each storage location (such as the target storage location) and each workstation.

In some embodiments, determining the storage weight of each storage location based on the position information of each storage location includes: obtaining the position information of each workstation; based on the position information of the target storage location and the position information of each workstation, determining an actual distance between the target storage location and each workstation respectively; and according to the actual distance between the target storage location and each workstation, determining the storage weight of the target storage location.

That is, determining the target distance between the target storage location and each workstation based on the position information of the target storage location and the position information of each workstation includes determining a first distance between the target storage location and each workstation based on the position information of the target storage location and the position information of each workstation. The target distance includes the first distance.

For example, the first distance between the target storage location and each workstation may be called the actual distance between the target storage location and each workstation.

In some embodiments, the position information of the workstation may be the specific position information of the workstation in the target inventory region or the coordinate position information corresponding to the workstation, where the coordinate position information may be the rectangular coordinate information in the rectangular coordinate system or the coordinate information in the world coordinate system. The representation of the position information of the workstation may be determined according to the actual situation, which is not limited by the embodiment of the present disclosure.

For example, after the position information of each storage location is obtained, the position information of each workstation may be obtained, and according to the position information of any storage location among respective storage locations and the position information of each workstation, the actual distance (i.e. the first distance) between the storage location and each workstation may be calculated respectively, and then the storage weight of the storage location may be determined according to the actual distance between the storage location and each workstation.

In some embodiments, the actual distances between the target storage location and respective workstations are added up to obtain a sum, and the sum is determined as the storage weight of the target storage location.

For example, the description is made by taking an example that the position information of each workstation and the position information of the target storage location is the rectangular coordinate information in the rectangular coordinate system. There are three workstations in the target inventory region P, namely workstation 1, workstation 2 and workstation 3, and all the three workstations are located at the same side of the storage region. When the rectangular coordinate system is established with workstation 2 as the origin, an axis parallel to a row where workstation 1, workstation 2 and workstation 3 are located as the X-axis, and an axis perpendicular to the row where workstation 1, workstation 2 and workstation 3 are located as the Y-axis, the position information of workstation 2 may be (0, 0), the position information of the target storage location is (5, 3), the position information of workstation 1 is (-10, 0), and the position information of workstation 3 is (10, 0). Therefore, based on the position information of workstation 1, workstation 2 and workstation 3, and the position information of the target storage location, the distance between the target storage location and workstation 1 may be calculated as 18, the distance between the target storage location and workstation 2 may be calculated as 8, and the distance between the target storage location and workstation 3 may be calculated as 8, through a distance formula.

Therefore, when the distances between the target storage location and workstations 1, 2 and 3 are determined to be 18, 8 and 8 respectively, it may be determined that the sum of the distances between the target storage location and workstations 1, 2 and 3 is 18+8+8=34, and then the storage weight of the target storage location is determined to be 34.

In some embodiments, the inventory regions are different, the robots working in the inventory regions have different working ways, or the actual business requirements are different, thus resulting in different prioritized storage requirements for each storage location. Therefore, determining the storage weight corresponding to each storage location only based on the actual distance between the storage location and each workstation may make the storage weight of each storage location inaccurate. Thus, it is necessary to further determine the storage weight of each storage location in combination with the actual business situation.

In some embodiments, determining the storage weight of each storage location based on the position information of each storage location includes: obtaining the position information of each workstation; determining a position parameter group of the target storage location relative to each workstation based on the position information of the target storage location and the position information of each workstation, where the position parameter group includes a plurality of position parameters; according to business requirements for the target inventory region, determining weight parameters corresponding to different position parameters; determining target distance information of the target storage location based on the position parameters in each position parameter group and the corresponding weight parameters; and according to the target distance information of the target storage location, determining the storage weight of the target storage location.

That is, determining the target distance between the target storage location and each workstation based on the position information of the target storage location and the position information of each workstation further includes: determining the position parameter group of the target storage location relative to each workstation based on the position information of the target storage location and the position information of each workstation; according to business requirements of the target inventory region, determining the weight parameter corresponding to each position parameter among the plurality of position parameters in the position parameter group; and determining a second distance of the target storage location based on each position parameter in the position parameter group and the weight parameter corresponding to each position parameter, where the target distance includes the second distance.

For example, the second distance between the target storage location and each workstation may be called target distance information between the target storage location and each workstation.

In some embodiments, the position parameter group includes the plurality of position parameters, that is, each position parameter group is a combination of position parameters of the target storage location relative to each workstation.

In some embodiments, the position parameter group includes first direction relative position information, second direction relative position information and layer position information of the target storage location. The first direction relative position information may include difference information of a relative position of the target storage location relative to each workstation in a direction. The second direction relative position information may include difference information of a relative position of the target storage location relative to each workstation in another direction. The layer position information may include position information corresponding to a layer of the storage rack where the target storage location is located.

In some embodiments, each position parameter in the position parameter group has the corresponding weight parameter, and the weight parameter is a constraint coefficient that adjusts different position parameters according to different business requirements, and is used to indicate an influence degree of the business requirements on the storage weight of the target storage location. For example, the weight parameter corresponding to each position parameter may be the same or different.

In some embodiments, the second distance (the target distance information) refers to distance information between the target storage location and the workstation after adjustment based on the business requirements.

In some embodiments, after obtaining the position information of the target storage location and the position information of each workstation, the position parameter group of the target storage location is determined based on the position information of the target storage location and the position information of each workstation, and in a case of obtaining the business requirements for the target inventory region, the weight parameters corresponding to different position parameters are determined based on the business requirements, and the target distance information of the target storage location is determined according to the position parameters in each position parameter group and the weight parameters corresponding to the position parameters.

In some embodiments, determining the target distance information of the target storage location according to the position parameters in the position parameter group and the weight parameters corresponding to the position parameters includes: determining the position parameter group of the target storage location relative to any workstation, determining a distance of the target storage location relative to the workstation based on the position parameters in the position parameter group and the weight parameters corresponding to the position parameters, adding up the distances of the target storage location relative to respective workstations to obtain a sum, and determining the sum as the target distance information of the target storage location, or setting corresponding weights for different distance information based on that the distance information of the target storage location relative to each workstation is too small, performing weighted calculation based on this to obtain a weighted result, and determining the weighted result as the target distance information of the target storage location.

In some embodiments, the calculation method of the storage weight of each storage location may refer to the following formulas (1) and (2):

$$S = \sum_{i=1}^{n} L_i \quad \text{Formula (1)}$$

$$L_i = aX + bY + cW * F \quad \text{Formula (2)}$$

In Formula (1), S represents the storage weight of the target storage location, n represents a numeric count of workstations in the target inventory region, and Li represents the target distance information (i.e. the second distance) from the target storage location to the i-th workstation.

In formula (2), X represents the first direction relative position information of the target storage location and the i-th workstation, Y represents the second direction relative position information of the target storage location and the i-th workstation, W represents a position width of the target storage location, and F represents a layer weight corresponding to the layer position information of the target storage location, where a, b and c represent weight parameters corresponding to X, Y, W and F respectively, a, b and c are constants, and the sizes of a, b and c may be set according to requirements.

Therefore, the second distance between the target storage location and each workstation may be determined by formula (2), and the sum of the second distances between the target storage location and respective workstations may be determined as the storage weight of the target storage location according to formula (1).

In some embodiments, when there are three workstations in the target inventory region P, namely workstation 1, workstation 2 and workstation 3, the rectangular coordinate system is established with workstation 2 as the origin, and the position information of workstation 2 is (0, 0), in a case of taking an example that the position information of the target storage location is (400, 100), the position information of workstation 1 is (500, 0) and the position information of workstation 3 is (-500, 0), the first direction relative position information $X_1$ between the target storage location and workstation 1 may be the absolute value of the difference between the x coordinates of the target storage location and workstation 1, that is, $X_1=100$; the first direction relative position information $X_2$ between the target storage location and workstation 2 may be the absolute value of the difference between the x coordinates of the target storage location and workstation 2, that is, $X_2=400$; the first direction relative position information $X_3$ between the target storage location and workstation 3 may be the absolute value of the difference between the x coordinates of the target storage location and workstation 3, that is, $X_3=900$; the second direction relative position information $Y_1$ of the target storage location and workstation 1 may be the absolute value of the difference between the y coordinates of the target storage location and workstation 1, that is, $Y_1=100$; the second direction relative position information $Y_2$ of the target storage location and workstation 2 may be the absolute value of the difference between the y coordinates of the target storage location and workstation 2, that is, $Y_2=100$; the second direction relative position information $Y_3$ of the target storage location and workstation 3 may be the absolute value of the difference between the y coordinates of the target storage location and workstation 3, that is, $Y_3=100$. If the position width of the target storage location is 2 m, W=2.

In some embodiments, the lower the layer of the goods shelves where the storage location is located, the easier it is for the transfer device to perform transfer. Thus, a layer weight of the storage location may be set according to the level of the layer where the storage location is located. For example, the storage rack (such as the goods shelf) has 10 layers, and the higher the layer where the storage location is located, the smaller the layer weight corresponding to the storage location is. For example, when the serial numbers of the layers where the storage locations are located are from 1 to 10, the corresponding layer weights are from 10 to 1 respectively. For example, if the serial number of the layer where the target storage location is located is 1, the layer weight corresponding to the target storage location may be 10. That is, in the layer position information of the target storage location, the position width is 2, i.e., W=2, and the layer weight is 10, i.e., F=10.

For example, if a, b, and c are set to 1, 5 and 5 respectively for the business requirements of the target inventory region P, the target distance information from the target storage location to each workstation may be calculated and obtained according to the above formula (2), that is, the target distance information between the target storage location and workstation 1 is $L_1=1*100+5*100+5*2*10=700$; the target distance information between the target storage location and workstation 2 is $L_2=1*400+5*100+5*2*10=1000$; the target distance information between the target storage location and workstation 3 is $L_3=1*900+5*100+5*2*10=1500$. Therefore, according to the above formula (1), it may be calculated and obtained that the storage weight of the target storage location is: S=700+1000+1500=3200, that is, the storage weight of the target storage location is 3200.

According to the goods unit scheduling method provided by the embodiment of the present disclosure, the storage weight corresponding to each storage location is further calculated based on the target distance information between each storage location and each workstation, so that the storage location corresponding to each goods unit may be determined according to the storage weight of each storage location in the subsequent process, and the reasonable distribution of storage of each goods unit may be realized.

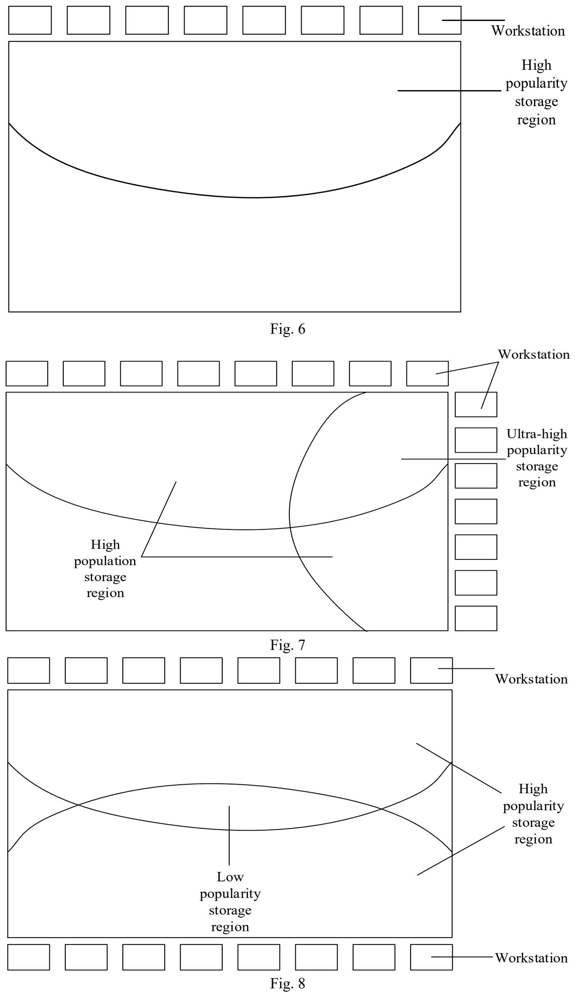

Figs. 6 to 8 are schematic diagrams of three storage scenarios of goods units provided by embodiments of the present disclosure. Fig. 6 is a schematic diagram of a storage scenario of single-sided workstations provided by some embodiments of the present disclosure, Fig. 7 is a schematic diagram of a storage scenario of double-sided workstations provided by some embodiments of the present disclosure, and Fig. 8 is a schematic diagram of another storage scenario of double-sided workstations provided by some embodiments of the present disclosure. With reference to Figs. 6 to 8, three different storage scenarios of goods units will be described below.

Fig. 6 illustrates an application scenario of single-sided workstations. As shown in Fig. 6, multiple workstations are located at one side of the storage locations in the target inventory region. According to the above steps 502 to 504, the storage weight of each storage location in the target inventory region may be determined, and a region composed of storage locations with higher storage weights is called a high popularity storage region. The higher storage weight may include the storage weight greater than a first threshold.

Fig. 7 illustrates an application scenario of multi-sided workstations. As shown in Fig. 7, multiple workstations are located on two adjacent sides of storage locations in the target inventory region. In view of this scenario, the above goods unit scheduling method may be used to calculate and obtain the storage weights of the storage locations in two single-sided workstation scenarios, and then the calculated storage weights of the storage locations in the two single-sided workstation scenarios may be mapped and added up to obtain an ultra-high popularity storage region as shown in Fig. 7.

That is, according to the above steps 502 to 504, the target distance between each storage location and each workstation on each side may be calculated respectively, and the storage weight of each storage location may be determined according to the sum of the target distances. As shown in Fig. 7, a region composed of storage locations with the highest storage weights may be determined as the ultra-high popularity storage region, and a region composed of storage locations with higher storage weights may be determined as the high popularity storage region. The highest storage weight may include the storage weight greater than a second threshold.

Fig. 8 is another application scenario of multi-sided workstations. As shown in Fig. 8, multiple workstations are located on opposite sides of storage locations in the target inventory region. In view of this scenario, the above goods unit scheduling method may be used to calculate and obtain the storage weights of the storage locations in two single-sided workstation scenarios, and the calculated storage weights of the storage locations in the two single-sided workstation scenarios may be mapped and subtracted to obtain a low popularity storage region as shown in Fig. 8.

That is, according to the above steps 502 to 504, the target distance between each storage location and each workstation on each side may be calculated respectively, and the storage weight of each storage location may be determined according to the sum of the target distances. As shown in Fig. 8, a region composed of storage locations with higher storage weights may be determined as the high popularity storage region, and a region composed of storage locations with lower storage weights may be determined as the low popularity storage region. The lower storage weight may include the storage weight less than or equal to the first threshold.

According to the goods unit scheduling method provided by the embodiment of the disclosure, the storage weight corresponding to the storage location is determined by calculating the distance between the storage location and each workstation, and then the corresponding storage location may be determined for each goods unit according to the storage weight corresponding to the storage location, so that the rationality of storage of each goods unit is improved, and the working efficiency of the transfer device is improved.

In step 506, according to the popularity information of each goods unit and the storage weight of each storage location, the storage location corresponding to each goods unit is determined, and a transfer instruction is sent to a fourth transfer device to control the fourth transfer device to transfer each goods unit to the corresponding storage location.

The fourth transfer device refers to a robot or other intelligent transfer devices operating in the target inventory region. The transfer instruction is an instruction to drive the transfer device to transfer the goods unit to the storage location corresponding to the goods unit.

In some embodiments, after determining the storage weight of each storage location, the storage location corresponding to each goods unit may be determined according to the storage weight of each storage location and the popularity information of each goods unit, and after determining the storage location corresponding to each goods unit, the transfer instruction may be sent to the fourth transfer device to drive the fourth transfer device to transfer each goods unit to the corresponding storage location.

In some embodiments, determining the storage location corresponding to each goods unit according to the popularity information of each goods unit and the storage weight of each storage location includes: ranking the storage weights of respective storage locations in a descending order to obtain a storage location weight list; ranking the popularity information of respective goods units in a descending order to obtain a goods units popularity list; and determining the storage location corresponding to each goods unit according to the storage location weight list and the goods unit popularity list.

The storage location weight list refers to a list composed of respective storage locations after the storage weights of respective storage locations are ranked in the descending order. The goods unit popularity list refers to a list composed of respective goods units after the popularity information of respective goods units are ranked in the descending order.

For example, after determining the storage weights of respective storage locations and the popularity information of respective goods units, the storage weights of respective storage locations are ranked in in the descending order to obtain the storage location weight list, and the popularity information of respective goods units is ranked in the descending order to obtain the goods unit popularity list. According to the storage location weight list and the goods unit popularity list, the corresponding storage location is determined for each goods unit.

In some embodiments, according to the storage location weight list and the goods unit popularity list, determining the storage location corresponding to each goods unit includes: determining a numeric count of the target goods units in the goods unit popularity list; and based on the numeric count of the target goods units, determining the storage locations, whose numeric count is the same as the numeric count of the target goods units, from the storage location weight list according to the descending order of the storage weights.

In some embodiments, the target goods unit refers to a goods unit that stores the same goods identifier. The same goods identifier may be the same SKU. For example, goods boxes Q1, Q2 and Q3 all store goods of SKU1, and thus goods boxes Q1, Q2 and Q3 all are target goods units.

In some other examples, the target goods unit may also be a goods unit with the same popularity information. For example, when goods boxes Q1, Q2 and Q3 are goods units with the same popularity information in the popularity list, goods boxes Q1, Q2 and Q3 may be determined as target goods units.

It should be noted that when the popularity information of two goods units in the popularity list is the same, the goods placed in the two goods units may be the same or different, which is not limited by the embodiment of the present disclosure.

In some embodiments, the numeric count of the target goods units is determined in the goods unit popularity list, and the storage locations, whose numeric count is the same as the numeric count of the target goods units, are determined from the storage location weight list based on the numeric count of the target goods units according to the descending order of the storage weights.

For example, goods boxes Q1, Q2 and Q3 all store the goods of SKU1, and the numeric count of the target goods units is determined to be 3. From the storage location weight list, three storage locations are determined according to the descending order of the storage weights, that is, the determined three storage locations are the storage locations corresponding to goods boxes Q1, Q2 and Q3.

In order to improve the matching efficiency between each goods unit and each storage location, and avoid the data matching confusion caused by the storage location for which the corresponding goods unit to be stored has been determined, the storage location for which the corresponding goods unit to be stored has been determined may be deleted.

In some embodiments, after determining the storage locations whose numeric count is the same as the numeric count of the target goods units, the method further includes deleting the storage locations whose numeric count is the same as the numeric count of the target goods units from the storage location weight list.

In some embodiments, after matching some storage locations with some goods units, the matched storage locations may be deleted from the storage location weight list, so that the storage location weight list only contains the unmatched storage locations, thereby avoiding data interference caused by the matched storage locations, and improving the matching efficiency between the storage locations and the goods units.

In some embodiments, determining the storage location corresponding to each goods unit according to the storage location weight list and the goods unit popularity list further includes: classifying each goods units based on the goods unit popularity list to obtain a goods unit popularity classification result; classifying each storage location in the storage location weight list based on the goods unit popularity classification result to obtain a storage location weight classification result; and determining the storage location corresponding to each goods unit according to the goods unit popularity classification result and the storage location weight classification result.

In some embodiments, after obtaining the goods unit popularity list, each goods unit in the goods unit popularity list may be classified according to the goods unit popularity list. For example, it may be classified according to the size of the goods popularity information corresponding to each goods unit, or it may be classified according to the outbound quantity of each goods unit in the outbound delivery, and the corresponding goods unit popularity classification result may be obtained according to the classification of each goods unit. The numeric count of goods units included in each classification may be the same or different.

In some embodiments, each storage location in the storage location weight list is classified according to the goods unit popularity classification result, and each storage location may be classified in the same way as each goods unit, to obtain the corresponding storage location weight classification result. Since the storage location is classified based on the method for obtaining the goods unit popularity classification result and according to the goods unit popularity classification result, there is a classification correspondence between the goods unit popularity classification result and the storage location weight classification result. Therefore, according to the corresponding relationship between the goods unit popularity classification result and the storage location weight classification result, the storage location corresponding to each goods unit may be determined.

For example, based on the popularity information of each goods unit, respective goods units are classified into three classes: A, B and C. There are 1000 goods units of class A, 800 goods units of class B, and 700 goods units of class C. In the storage location weight list, each storage location is classified, for example, the first 1000 storage locations in the storage location weight list are classified as storage locations of class A, the 1001st to 1800th storage locations are classified as storage locations of class B, and the 1801st to 2500th storage locations are classified as storage locations of class C. The first 1000 storage locations of class A are determined as storage locations corresponding to the 1000 goods units of class A, the 1001st to 1800th storage locations of class B are determined as storage locations corresponding to the 800 goods units of class B, and the 1801st to 2500th storage locations of class C are determined as storage locations corresponding to the 700 goods units of class C.

In order to further avoid robot congestion caused by concentrated distribution of goods units with high popularity information, the goods units for which the storage locations have been determined may be further allocated, on the basis of determining the storage location corresponding to each goods unit based on the goods unit popularity classification result and the storage location weight classification result.

In some embodiments, the allocation may be performed based on the numeric count of passages in the storage region to which the storage locations belong. Taking an example that the first 1000 storage locations of class A are determined as storage locations corresponding to the 1000 goods units of class A, if there are 10 passages, along which these 1000 storage locations are arranged, in the storage region to which these 1000 storage locations belong, the 1000 goods units of class A may be allocated in a manner that 100 goods units of class A are stored in each passage.

After determining the storage weight of each storage location and the popularity information of each goods unit, the goods unit scheduling method provided by the embodiment of the present disclosure may perform association matching on each storage location and each goods unit based on the storage weight of each storage location and the popularity information of each goods unit, so as to determine the storage location corresponding to each goods unit.

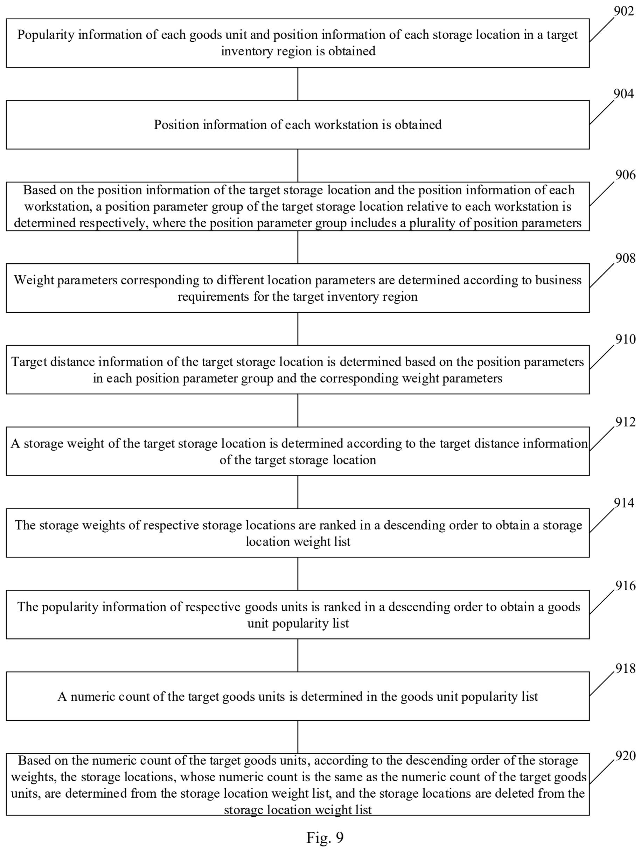

Fig. 9 is a schematic diagram of another goods unit scheduling method provided by some embodiments of the present disclosure. In the following, with reference to Fig. 9, taking the application of the goods unit scheduling method provided by the present disclosure in the goods inventory distribution scenario as an example, the goods unit scheduling method will be further explained. As shown in Fig. 9, the method includes the following steps.

In step 902, popularity information of each goods unit and position information of each storage location in a target inventory region is obtained.

In step 904, position information of each workstation is obtained.

In step 906, based on the position information of the target storage location and the position information of each workstation, a position parameter group of the target storage location relative to each workstation is determined respectively, where the position parameter group includes a plurality of position parameters.

In step 908, weight parameters corresponding to different location parameters are determined according to business requirements for the target inventory region.

In step 910, target distance information of the target storage location is determined based on the position parameters in each position parameter group and the corresponding weight parameters.

In step 912, a storage weight of the target storage location is determined according to the target distance information of the target storage location.

In step 914, the storage weights of respective storage locations are ranked in a descending order to obtain a storage location weight list.

In step 916, the popularity information of respective goods units is ranked in a descending order to obtain a goods unit popularity list.

In step 918, a numeric count of the target goods units is determined in the goods unit popularity list.

In step 920, based on the numeric count of the target goods units, according to the descending order of the storage weights, the storage locations, whose numeric count is the same as the numeric count of the target goods units, are determined from the storage location weight list, and the storage locations are deleted from the storage location weight list.

Some embodiments provided by the present disclosure realize that the storage weight of each storage location is determined according to the position information of each storage location and the position information of each workstation, and then the storage location corresponding to each goods unit is determined based on the popularity information of each goods unit and the storage weight of each storage location, thus realizing the combination of the popularity information of the goods unit and the storage weight of the storage location, realizing the reasonable distribution of the goods units in the target inventory region, and from the aspect of the inventory distribution of the goods units, shortening the transfer time for the transfer device, reducing the congestion rate of the transfer device, and improving the working efficiency of the transfer device.

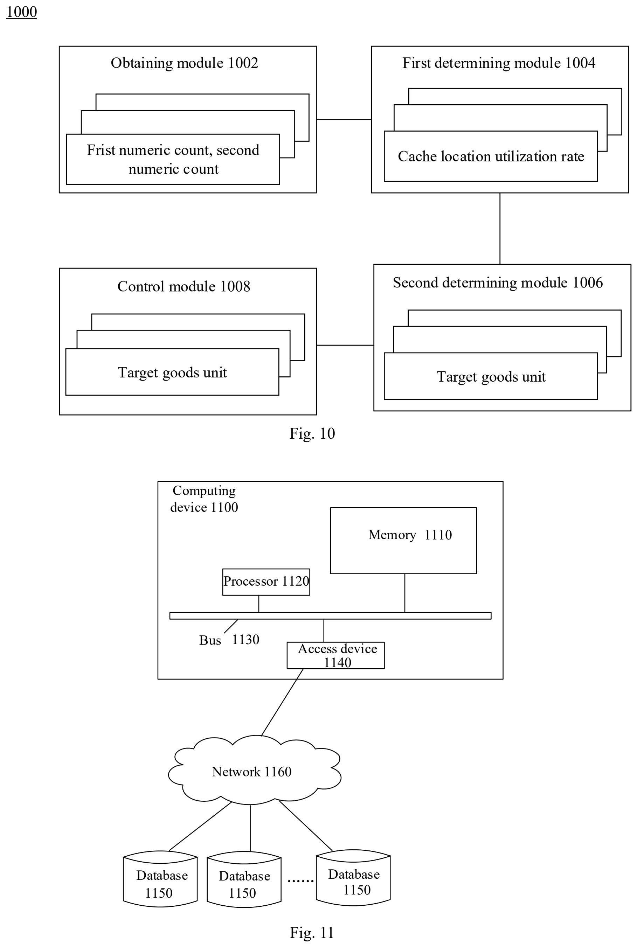

Corresponding to the above method embodiments, the embodiments of the present disclosure also provide a goods unit scheduling device. Fig. 10 is a schematic diagram of a goods unit scheduling device provided by some embodiments of the present disclosure. As shown in Fig. 10, the device includes an obtaining module 1002, a first determining module 1004, a second determining module 1006 and a control module 1008.

The obtaining module 1002 is configured to obtain a first numeric count of pre-arranged cache locations in a first storage region of a warehousing system and a second numeric count of occupied cache locations in the first storage region. The first storage region includes at least one storage rack, and each storage rack is pre-provided with a plurality of cache locations and a plurality of storage locations.

The first determining module 1004 is configured to determine a cache location utilization rate of the first storage region according to the first numeric count and the second numeric count.

The second determining module 1006 is configured to determine a target goods unit among the goods units cached in the occupied cache locations when the cache location utilization rate reaches a preset utilization rate threshold.

The control module 1008 is configured to send a goods unit transfer instruction to a first transfer device in the first storage region to control the first transfer device to transfer the target goods unit to a target idle storage location.

In some embodiments, the second determining module 1006 is configured to: determine at least one first goods unit not hit by a first order among the goods units cached in the occupied cache locations; and determine the target goods unit among the at least one first goods unit.

In some embodiments, the second determining module 1006 is configured to: determine score information of each first goods unit; and determine the target goods unit among the first goods units with the score information less than a score threshold.

In some embodiments, the second determining module 1006 is configured to determine at least one of a transfer weight of each first goods unit, a transfer distance between each first goods unit and the first transfer device, and popularity information of each first goods unit, where the transfer weight of the first goods unit is used to indicate a probability that the first goods unit is hit by a second order; and determine the score information of each first goods unit based on the at least one of the transfer weight of each first goods unit, the transfer distance between each first goods unit and the first transfer device, and the popularity information of each first goods unit.

In some embodiments, the control module 1008 is configured to: determine the target idle storage location among at least one idle storage location in the first storage region; generate a goods unit transfer instruction according to position information of the target idle storage location; and send the goods unit transfer instruction to the first transfer device, to cause the first transfer device to transfer the target goods unit to the target idle storage location.

In some embodiments, the control module 1008 is configured to: randomly determine the target idle storage location among the at least one idle storage location; or, determine the target idle storage location based on a distance between each idle storage location and the first transfer device.

In some embodiments, the control module 1008 is configured to: if there are idle storage locations, which are in the same column as the target cache location where the target goods unit is, among the at least one idle storage location in the first storage region, determine the target idle storage location among the idle storage locations in the same column as the target cache location; and if there are no idle storage locations, which are in the same column as the target cache location, among the at least one idle storage location in the first storage region, determine the target idle storage location among the at least one idle storage location in the first storage region based on position information of the target cache location.

In some embodiments, the control module 1008 is configured to: determine a horizontal distance between each idle storage location and the target cache location based on the position information of the target cache location; and determine the target idle storage location based on the idle storage location having the shortest horizontal distance from the target cache location among the at least one idle storage location.

In some embodiments, the control module 1008 is configured to: determine a storage weight of each idle storage location according to position information of each idle storage location of the at least one idle storage location; and determine the target idle storage location among the at least one idle storage location according to popularity information of the target goods unit and the storage weight of each idle storage location.

In some embodiments, the device 1000 further comprises a third determining module and an assigning module. The third determining module is configured to: determine a second goods unit corresponding to a task assignment request in the first storage region in response to the task assignment request corresponding to the first storage region; and determine a numeric count of tasks to be completed in the first storage region based on a numeric count of the second goods units. The assigning module is configured to assign a task to be assigned carried in the task assignment request to the first transfer device when the numeric count of tasks to be completed in the first storage region does not reach a first preset task threshold.

In some embodiments, the third determining module is further configured to determine a goods identifier carried in the task assignment request when the numeric count of tasks to be completed in the first storage region reaches the first preset task threshold. The assigning module is configured to assign the task to be assigned carried in the task assignment request to a second transfer device in a second storage region based on the goods identifier. The control module 1008 is configured to control the second transfer device to perform the task to be assigned in the second storage region, where the second storage region stores the goods unit corresponding to the goods identifier.

In some embodiments, the third determining module is further configured to determine the goods identifier carried in the task assignment request when the numeric count of tasks to be completed in the first storage region reaches the first preset task threshold. The assigning module is configured to assign a target task corresponding to the target goods identifier to the first transfer device when the target goods identifier is determined, where the target goods identifier is matched with the first storage region.

In some embodiments, the device 1000 further includes a fourth determining module configured to determine a task to be assigned among the tasks to be completed based on a numeric count of tasks to be completed and a second preset task threshold when the numeric count of tasks to be completed in the first storage region is greater than the second preset task threshold. The assigning module is configured to assign the task to be assigned to a third transfer device in a third storage region. The control module 1008 is configured to control the third transfer device to perform the task to be assigned in the first storage region. The third storage region is a storage region adjacent to the first storage region.

In some embodiments, the assigning module is configured to assign the tasks to be completed in the first storage region to a third transfer device in a third storage region when a time since the first transfer device has left the first storage region reaches a preset time threshold. The control module 1008 is configured to control the third transfer device to perform the tasks to be completed in the first storage region. The third storage region is a storage region adjacent to the first storage region.

In some embodiments, the assigning module is further configured to assign the tasks to be completed in the first storage region to the first transfer device in a case the first transfer device returns to the first storage region.

In some embodiments, the device 1000 further includes a fifth determining module configured to: determine popularity information of each goods unit to be stored in the warehousing system and position information of each storage location in a target inventory region in the warehousing system; determine a storage weight of each storage location based on the position information of each storage location; and according to the popularity information of each goods unit and the storage weight of each storage location, determine the storage location corresponding to each goods unit. The control module 1008 is configured to send a transfer instruction to a fourth transfer device to control the fourth transfer device to transfer each goods unit to the corresponding storage location.

In some embodiments, the fifth determining module is configured to: determine goods popularity information of goods stored in each goods unit; and based on the goods popularity information of the goods stored in each goods unit, determine the popularity information of each goods unit.

In some embodiments, the fifth determining module is configured to: obtain position information of each workstation in the warehousing system; determine a target distance between a target storage location and each workstation based on position information of the target storage location and the position information of each workstation, where the target storage location is any storage location in the target inventory region; and according to the target distance between the target storage location and each workstation, determine a storage weight of the target storage location.

In some embodiments, the fifth determining module is configured to determine a first distance between the target storage location and each workstation based on the position information of the target storage location and the position information of each workstation, where the target distance includes the first distance.

In some embodiments, the fifth determining module is configured to determine a position parameter group of the target storage location and each workstation based on the position information of the target storage location and the position information of each workstation, where the position parameter group includes a plurality of position parameters; according to business requirements of the target inventory region, determine a weight parameter corresponding to each position parameter of the plurality of position parameters; and determine a second distance of the target storage location based on each position parameter in the position parameter group and the weight parameter corresponding to each position parameter, where the target distance includes the second distance.

In some embodiments, the fifth determining module is configured to: determine a sum of the target distances according to the target distance between the target storage location and each workstation; and according to the sum of the target distances, determine the storage weight of the target storage location.

In some embodiments, the fifth determining module is configured to: rank the storage weights of respective storage locations in a descending order to obtain a storage location weight list; rank the popularity information of respective goods unit in a descending order to obtain a goods unit popularity list; and according to the storage location weight list and the goods unit popularity list, determine the storage location corresponding to each goods unit.

In some embodiments, the fifth determining module is configured to: determine a numeric count of the target goods units in the goods unit popularity list; and determine the storage locations, whose numeric count is the same as the numeric count of the target goods units, from the storage location weight list based on the numeric count of the target goods units according to the descending order of the storage weights.

In some embodiments, the device 1000 further includes a deleting module configured to delete the storage locations, whose numeric count is the same as the numeric count of the target goods units, from the storage location weight list.

In some embodiments, the fifth determining module is configured to: classify each goods unit based on the goods unit popularity list to obtain a goods unit popularity classification result; classify each storage location in the storage location weight list based on the goods unit popularity classification result to obtain a storage location weight classification result; and according to the goods unit popularity classification result and the storage location weight classification result, determine the storage location corresponding to each goods unit.

It should be noted that the technical scheme of the above goods unit scheduling device in the embodiment of the present disclosure belongs to the same concept as the technical scheme of the above goods unit scheduling method. For details not elaborated in the technical scheme of the goods unit scheduling device, reference may be made to the description of the technical scheme of the above goods unit scheduling method.

Fig. 11 is a schematic diagram of a computing device 1100 provided by some embodiments of the present disclosure. Components of the computing device 1100 include, but are not limited to, a memory 1110 and a processor 1120. The processor 1120 and the memory 1110 are connected by a bus 1130, and a database 1150 is used to store data.

The computing device 1100 also includes an access device 1140 that enables the computing device 1100 to communicate via one or more networks 1160. Examples of these networks include a public switched telephone network (PSTN), a local area network (LAN), a wide area network (WAN), a personal area network (PAN) or a combination of communication networks such as the Internet. The access device 1140 may include one or more of any type of wired or wireless network interface (e.g., a network interface controller (NIC)), such as an IEEE802.11 wireless local area network (WLAN) wireless interface, a worldwide interoperability for microwave access (Wi-MAX) interface, an Ethernet interface, a universal serial bus (USB) interface, a cellular network interface, a Bluetooth interface, a near field communication (NFC) interface, and so on.

In some embodiments, the above components of the computing device 1100 and other components not shown in Fig. 11 may also be connected to each other, for example, through a bus. It should be noted that the block diagram of the computing device shown in Fig. 11 is only for the purpose of example, and is not a limitation on the scope of the present disclosure. Those skilled in the art may add or replace other components as needed.

The computing device 1100 may be any type of static or mobile computing device, including mobile computers or mobile computing devices (e.g., tablet computers, personal digital assistants, laptop computers, notebook computers, netbooks, etc.), mobile phones (e.g., smart phones), wearable computing devices (e.g., smart watches, smart glasses, etc.) or other types of mobile devices, or such as desktop computers or personal computers (PCs). The computing device 1100 may also be a mobile or stationary server.

When the processor 1120 executes the computer instructions, the steps of the goods unit scheduling method are realized.

The above is a schematic scheme of the computing device in this embodiment. It should be noted that the technical scheme of the computing device belongs to the same concept as the technical scheme of the above goods unit scheduling method. For details not elaborated in the technical scheme of the computing device, reference may be made to the description of the technical scheme of the above goods unit scheduling method.

Some embodiments of that present disclosure also provide a computer-readable storage medium storing compute instructions which, when executed by a processor, implement the steps of the goods unit scheduling method as described above.

The above is a schematic scheme of the computer-readable storage medium in this embodiment. It should be noted that the technical scheme of the storage medium belongs to the same concept as the technical scheme of the above goods unit scheduling method. For details not elaborated in the technical scheme of the storage medium, reference may be made to the description of the technical scheme of the above goods unit scheduling method.

Specific embodiments of that present disclosure have been described above. Other embodiments are within the scope of the appended claims. In some cases, the actions or steps recited in the claims may be performed in a different order than in the embodiments and still achieve the desired results. In addition, the processes depicted in the drawings do not necessarily require the specific order or the sequential order shown to achieve the desired results. In some embodiments, multitasking and parallel processing are also possible or may be advantageous.

The computer instructions include computer program codes, which may be in the form of source codes, object codes, or executable files or in some intermediate form, etc. The computer-readable medium may include any entity or device capable of carrying the computer program codes, such as a recording medium, a U disk, a mobile hard disk, a magnetic disk, an optical disk, a computer memory, a read-only memory (ROM), a random access memory (RAM), an electric carrier signal, a telecommunication signal, a software distribution medium, etc. It should be noted that the contents contained in the computer-readable medium may be appropriately increased or decreased according to the requirements of legislation and patent practice in the jurisdiction. For example, in some jurisdictions, according to legislation and patent practice, the computer-readable medium does not include the electric carrier signal and the telecommunication signal.

It should be noted that for the convenience of description, all the aforementioned method embodiments are expressed as a series of action combinations, but those skilled in the art should know that the present disclosure is not limited by the described action sequence, because some steps may be performed in other sequences or at the same time according to the present disclosure. Further, those skilled in the art should also know that the embodiments described in the specification are all preferred embodiments, and the actions and modules involved are not necessarily necessary for the present disclosure.

In the above embodiments, the description of each embodiment has its own emphasis. For the parts not detailed in one embodiment, reference may be made to the relevant descriptions of other embodiments.

The preferred embodiments of the present disclosure disclosed above are only used to help explain the present disclosure. The optional embodiments are not described in detail, nor do these embodiments limit the present disclosure to the specific embodiments described. Obviously, many modifications and changes may be made in light of the content of the present disclosure. These embodiments are selected and described in detail in the present disclosure in order to better explain the principle and practical application of the present disclosure, so that those skilled in the art may better understand and make use of the present disclosure. The present disclosure is limited only by the claims as well as the full scope and equivalents thereof.

**Claims**

1. A goods unit scheduling method, performed by a control device, and comprising:

   obtaining a first numeric count of cache locations in a first storage region of a warehousing system and a second numeric count of occupied cache locations in the first storage region, wherein the first storage region comprises at least one storage rack, and each storage rack is pre-provided with a plurality of cache locations and a plurality of storage locations;
   determining a cache location utilization rate of the first storage region according to the first numeric count and the second numeric count;
   determining a target goods unit among the goods units cached in the occupied cache locations in a case that the cache location utilization rate reaches a preset utilization rate threshold; and
   sending a goods unit transfer instruction to a first transfer device in the first storage region to control the first transfer device to transfer the target goods unit to a target idle storage location in the first storage region.

2. The method according to claim 1, wherein determining the target goods unit among the goods units cached in the occupied cache locations comprises:

   determining at least one first goods unit not hit by a first order among the goods units cached in the occupied cache locations; and
   determining the target goods unit among the at least one first goods unit.

3. The method according to claim 2, wherein determining the target goods unit among the at least one first goods unit comprises:

   determining score information of each first goods unit; and
   determining the target goods unit among the first goods units with the score information less than a score threshold.

4. The method according to claim 3, wherein determining the score information of each first goods unit comprises:

   determining at least one of a transfer weight of each first goods unit, a transfer distance between each first goods unit and the first transfer device, and popularity information of each first goods unit, wherein the transfer weight of the first goods unit is configured to indicate a probability that the first goods unit is hit by a second order; and
   determining the score information of each first goods unit based on the at least one of the transfer weight of each first goods unit, the transfer distance between each first goods unit and the first transfer device, and the popularity information of each first goods unit.

5. The method according to claim 1, wherein sending the goods unit transfer instruction to the first transfer device in the first storage region to control the first transfer device to transfer the target goods unit to the target idle storage location comprises:

> determining the target idle storage location among at least one idle storage location in the first storage region;
> generating the goods unit transfer instruction according to position information of the target idle storage location; and
> sending the goods unit transfer instruction to the first transfer device, to cause the first transfer device to transfer the target goods unit to the target idle storage location.

6. The method according to claim 5, wherein determining the target idle storage location among the at least one idle storage location in the first storage region comprises:

> randomly determining the target idle storage location among the at least one idle storage location; or
> determining the target idle storage location based on a distance between each idle storage location and the first transfer device.

7. The method according to claim 5, wherein determining the target idle storage location among the at least one idle storage location in the first storage region comprises:

> in a case that there are idle storage locations, which are in the same column as a target cache location where the target goods unit is, among the at least one idle storage location in the first storage region, determining the target idle storage location among the idle storage locations in the same column as the target cache location; and
> in a case that there are no idle storage locations, which are in the same column as the target cache location, among the at least one idle storage location in the first storage region, determining the target idle storage location among the at least one idle storage location in the first storage region based on position information of the target cache location.

8. The method according to claim 7, wherein determining the target idle storage location among the at least one idle storage location in the first storage region based on the position information of the target cache location comprises:

> determining a horizontal distance between each idle storage location and the target cache location based on the position information of the target cache location; and
determining the target idle storage location based on the idle storage location having the shortest horizontal distance from the target cache location among the at least one idle storage location.

9. The method according to claim 5, wherein determining the target idle storage location among the at least one idle storage location in the first storage region comprises:

> determining a storage weight of each idle storage location according to position information of each idle storage location of the at least one idle storage location; and
> determining the target idle storage location among the at least one idle storage location according to the popularity information of the target goods unit and the storage weight of each idle storage location.

10. The method according to any one of claims 1-9, further comprising:

> in response to a task assignment request corresponding to the first storage region, determining a second goods unit corresponding to the task assignment request in the first storage region; and
> determining a numeric count of tasks to be completed in the first storage region based on a numeric count of the second goods units,
> wherein in a case that the numeric count of tasks to be completed in the first storage region does not reach a first preset task threshold, assigning a task to be assigned carried in the task assignment request to the first transfer device.

11. The method according to claim 10, further comprising:

> determining a goods identifier carried in the task assignment request in a case that the numeric count of tasks to be completed in the first storage region reaches the first preset task threshold; and
> assigning the task to be assigned carried in the task assignment request to a second transfer device in a second storage region based on the goods identifier, and controlling the second transfer device to perform the task to be assigned in the second storage region, wherein the second storage region stores the goods unit corresponding to the goods identifier.

12. The method according to claim 10, further comprising:

determining the goods identifier carried in the task assignment request in a case that the numeric count of tasks to be completed reaches the first preset task threshold; and

in a case that the target goods identifier is determined, assigning a target task corresponding to the target goods identifier to the first transfer device, wherein the target goods identifier is matched with the first storage region.

13. The method according to any one of claims 1-9, further comprising:

in a case that the numeric count of tasks to be completed in the first storage region is greater than a second preset task threshold, determining a task to be assigned among the tasks to be completed based on the numeric count of tasks to be completed and the second preset task threshold; and
assigning the task to be assigned to a third transfer device in a third storage region, and controlling the third transfer device to perform the task to be assigned in the first storage region, wherein the third storage region is a storage region adjacent to the first storage region.

14. The method according to any one of claims 1-9, further comprising:
in a case that a time since the first transfer device has left the first storage region reaches a preset time threshold, assigning the tasks to be completed in the first storage region to a third transfer device in a third storage region, and controlling the third transfer device to perform the tasks to be completed in the first storage region, wherein the third storage region is a storage region adjacent to the first storage region.

15. The method according to claim 14, further comprising:
in a case that the first transfer device returns to the first storage region, assigning the tasks to be completed in the first storage region to the first transfer device.

16. The method according to claim 1, further comprising:

determining popularity information of each goods unit to be stored in the warehousing system and position information of each storage location in a target inventory region in the warehousing system;
determining a storage weight of each storage location based on the position information of each storage location; and
according to the popularity information of each goods unit and the storage weight of each storage location, determining the storage location corresponding to each goods unit, and sending a transfer instruction to a fourth transfer device to control the fourth transfer device to transfer each goods unit to the corresponding storage location.

17. The method according to claim 16, wherein determining the popularity information of each goods unit to be stored in the warehousing system comprises:

determining goods popularity information of goods stored in each goods unit; and
determining the popularity information of each goods unit based on the goods popularity information of the goods stored in each goods unit.

18. The method according to claim 16, wherein determining the storage weight of each storage location based on the position information of each storage location comprises:

obtaining position information of each workstation in the warehousing system;
determining a target distance between the target storage location and each workstation based on the position information of the target storage location and the position information of each workstation, wherein the target storage location is any storage location in the target inventory region; and
determining the storage weight of the target storage location according to the target distance between the target storage location and each workstation.

19. The method according to claim 18, wherein determining the target distance between the target storage location and each workstation based on the position information of the target storage location and the position information of each workstation comprises:
determining a first distance between the target storage location and each workstation based on the position information of the target storage location and the position information of each workstation, wherein the target distance comprises the first distance.

20. The method according to claim 18, wherein determining the target distance between the target storage location and each workstation based on the position information of the target storage location and the position information of each workstation comprises:

determining a position parameter group of the target storage location and each workstation based on the position information of the target storage location and the position information of each workstation, wherein the position parameter group comprises a plurality of position parameters;

determining a weight parameter corresponding to each position parameter of the plurality of position parameters according to business requirements of the target inventory region; and

determining a second distance of the target storage location based on each position parameter in the position parameter group and the weight parameter corresponding to each position parameter, wherein the target distance comprises the second distance.

21. The method according to claim 18, wherein determining the storage weight of the target storage location according to the target distance between the target storage location and each workstation comprises:

determining a sum of the target distances according to the target distance between the target storage location and each workstation; and

determining the storage weight of the target storage location according to the sum of the target distances.

22. The method according to any one of claims 16-21, wherein determining the storage location corresponding to each goods unit according to the popularity information of each goods unit and the storage weight of each storage location comprises:

ranking the storage weights of respective storage locations in a descending order to obtain a storage location weight list;

ranking the popularity information of respective goods units in a descending order to obtain a goods units popularity list; and

determining the storage location corresponding to each goods unit according to the storage location weight list and the goods unit popularity list.

23. The method according to claim 22, wherein determining the storage location corresponding to each goods unit according to the storage location weight list and the goods unit popularity list comprises:

determining a numeric count of the target goods units in the goods unit popularity list; and

based on the numeric count of the target goods units, determining the storage locations, whose numeric count is the same as the numeric count of the target goods units, from the storage location weight list according to the descending order of the storage weights.

24. The method according to claim 23, wherein after determining the storage locations whose numeric count is the same as the numeric count of the target goods units, the method further comprises:

deleting the storage locations whose numeric count is the same as the numeric count of the target goods units from the storage location weight list.

25. The method according to claim 22, wherein determining the storage location corresponding to each goods unit according to the storage location weight list and the goods unit popularity list comprises:

classifying each goods units based on the goods unit popularity list to obtain a goods unit popularity classification result;

classifying each storage location in the storage location weight list based on the goods unit popularity classification result to obtain a storage location weight classification result; and

determining the storage location corresponding to each goods unit according to the goods unit popularity classification result and the storage location weight classification result.

26. A goods unit scheduling device, comprising:

an obtaining module configured to obtain a first numeric count of cache locations in a first storage region of a warehousing system and a second numeric count of occupied cache locations in the first storage region, wherein the first storage region comprises at least one storage rack, and each storage rack is pre-provided with a plurality of cache locations and a plurality of storage locations;

a first determining module configured to determine a cache location utilization rate of the first storage region according to the first numeric count and the second numeric count;

a second determining module configured to determine a target goods unit among the goods units cached in the occupied cache locations in a case that the cache location utilization rate reaches a preset utilization rate threshold; and

a control module configured to send a goods unit transfer instruction to a first transfer device in the first storage region to control the first transfer device to transfer the target goods unit to a target idle storage location.

27. A computing device, comprising a memory, a processor and computer instructions stored in the memory and executable on the processor, wherein the processor is configured to perform the steps of the method according to any one of claims 1-25, when executing the computer instructions.

28. A computer-readable storage medium, storing computer instructions which, when executed by a processor, cause the processor to perform the steps of the method according to any one of claims 1-25.

29. A computer program product, comprising a computer program which, when executed by a processor, causes the processor to perform the steps of the method according to any one of claims 1-25.

First storage region 100

(110)

......

120

Fig. 1A

120

Storage location

Cache location

Fig. 1B

Fig. 1C

Fig. 1D

A first numeric count of cache locations in a first storage region and a second numeric count of occupied cache locations in the first storage region are obtained — 202

According to the first numeric count and the second numeric count, a cache location utilization rate of the first storage region is determined — 204

When the cache location utilization rate reaches a preset utilization rate threshold, a target goods unit is determined among the goods units cached in the occupied cache locations — 206

A goods unit transfer instruction is sent to the first transfer device in the first storage region to control the first transfer device to transfer the target goods unit to a target idle storage location — 208

Fig. 2

A first numeric count of pre-arranged cache locations in a first storage region and a second numeric count of occupied cache locations in the first storage region are obtained ⌐302

According to the first numeric count and the second numeric count, a cache location utilization rate of the first storage region is determined ⌐304

When the cache location utilization rate reaches a preset utilization rate threshold, first goods boxes not hit by an order are determined among goods boxes cached in the occupied cache locations, and a target goods box is determined from the first goods boxes ⌐306

A target idle storage location is determined based on a distance between each idle storage location and a transfer robot ⌐308

Position information of the target idle storage location is carried in a goods box transfer instruction, and the goods box transfer instruction is sent to the transfer robot, to cause the transfer robot to transfer the target goods box to the target idle storage location ⌐310

Fig. 3

Target inventory region

Transfer device

......

Worksta tion

Worksta tion

Worksta tion

Fig. 4A

Fig. 4B

Fig. 4C

Fig. 4D

Popularity information of each goods unit to be stored in a warehousing system and position information of each storage location in a target inventory region in the warehousing system is determined — 502

A storage weight of each storage location is determined based on the position information of each storage location — 504

According to the popularity information of each goods unit and the storage weight of each storage location, the storage location corresponding to each goods unit is determined, and a transfer instruction is sent to a fourth transfer device to control the fourth transfer device to transfer each goods unit to the corresponding storage location — 506

Fig. 5

Fig. 6

Fig. 7

Fig. 8

Popularity information of each goods unit and position information of each storage location in a target inventory region is obtained | 902

Position information of each workstation is obtained | 904

Based on the position information of the target storage location and the position information of each workstation, a position parameter group of the target storage location relative to each workstation is determined respectively, where the position parameter group includes a plurality of position parameters | 906

Weight parameters corresponding to different location parameters are determined according to business requirements for the target inventory region | 908

Target distance information of the target storage location is determined based on the position parameters in each position parameter group and the corresponding weight parameters | 910

A storage weight of the target storage location is determined according to the target distance information of the target storage location | 912

The storage weights of respective storage locations are ranked in a descending order to obtain a storage location weight list | 914

The popularity information of respective goods units is ranked in a descending order to obtain a goods unit popularity list | 916

A numeric count of the target goods units is determined in the goods unit popularity list | 918

Based on the numeric count of the target goods units, according to the descending order of the storage weights, the storage locations, whose numeric count is the same as the numeric count of the target goods units, are determined from the storage location weight list, and the storage locations are deleted from the storage location weight list | 920

Fig. 9

1000

| Obtaining module 1002 | | First determining module 1004 |
|---|---|---|
| Frist numeric count, second numeric count | | Cache location utilization rate |

| Control module 1008 | | Second determining module 1006 |
|---|---|---|
| Target goods unit | | Target goods unit |

Fig. 10

Computing device 1100

Memory 1110

Processor 1120

Bus 1130

Access device 1140

Network 1160

Database 1150    Database 1150    ......    Database 1150

Fig. 11

## INTERNATIONAL SEARCH REPORT

| International application No. |
|---|
| **PCT/CN2024/087237** |

| A. | CLASSIFICATION OF SUBJECT MATTER |
|---|---|

B65G1/04(2006.01)i; B65G1/137(2006.01)i; G06Q10/08(2024.01)i

According to International Patent Classification (IPC) or to both national classification and IPC

| B. | FIELDS SEARCHED |
|---|---|

Minimum documentation searched (classification system followed by classification symbols)

IPC: B65G1/-,G06Q10/-

Documentation searched other than minimum documentation to the extent that such documents are included in the fields searched

Electronic data base consulted during the international search (name of data base and, where practicable, search terms used)

CNTXT, ENTXTC, WPABSC, CJFD: 极智嘉科技, 贾雨晨, 货架, 入库, 存放, 存储, 搬运, 转运, 缓存, 暂存, 空闲, 临时, 阈值, 占用率, 使用率; DWPI, ENTXT, VEN: storage, shelf, warehous+, transport+, convey, cache, buffer, idle+, temporar+, threshold, occupancy, utilization, rate;

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2023025222 A1 (BEIJING GEEKPLUS TECHNOLOGY CO., LTD.) 02 March 2023 (2023-03-02) <br> description, pages 1-24, and figures 1-16 | 1-4, 26-29 |
| Y | WO 2023025222 A1 (BEIJING GEEKPLUS TECHNOLOGY CO., LTD.) 02 March 2023 (2023-03-02) <br> description, pages 1-24, and figures 1-16 | 5-9 |
| Y | CN 111361908 A (SHANGHAI QUICKTRON INTELLIGENT TECHNOLOGY CO., LTD.) 03 July 2020 (2020-07-03) <br> description, paragraphs 4-204, and figures 1-16 | 5-9 |
| A | CN 114379969 A (BEIJING GEEKPLUS TECHNOLOGY CO., LTD.) 22 April 2022 (2022-04-22) <br> entire document | 1-29 |
| A | CN 111453275 A (SHANGHAI QUICKTRON INTELLIGENT TECHNOLOGY CO., LTD.) 28 July 2020 (2020-07-28) <br> entire document | 1-29 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 June 2024** | **19 June 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/087237** |

**C.    DOCUMENTS CONSIDERED TO BE RELEVANT**

| Category* | Citation of document, with indication, where appropriate, of the relevant passages | Relevant to claim No. |
|---|---|---|
| A | CN 115626411 A (SHANGHAI QUICKTRON INTELLIGENT TECHNOLOGY CO., LTD.) 20 January 2023 (2023-01-20)<br>entire document | 1-29 |
| A | US 2021261333 A1 (TGW LOGISTICS GROUP GMBH) 26 August 2021 (2021-08-26)<br>entire document | 1-29 |
| A | CN 112278674 A (BEIJING JINGDONG QIANSHI TECHNOLOGY CO., LTD.) 29 January 2021 (2021-01-29)<br>entire document | 1-29 |
| A | CN 115158945 A (HANGZHOU YIWU TECHNOLOGY CO., LTD.) 11 October 2022 (2022-10-11)<br>entire document | 1-29 |
| A | CN 106966100 A (BEIJING JINGDONG SHANGKE INFORMATION TECHNOLOGY CO., LTD. et al.) 21 July 2017 (2017-07-21)<br>entire document | 1-29 |

Form PCT/ISA/210 (second sheet) (July 2022)

**INTERNATIONAL SEARCH REPORT**
Information on patent family members

International application No.

**PCT/CN2024/087237**

| Patent document cited in search report | | | Publication date (day/month/year) | Patent family member(s) | | | Publication date (day/month/year) |
|---|---|---|---|---|---|---|---|
| WO | 2023025222 | A1 | 02 March 2023 | TW | 202308917 | A | 01 March 2023 |
| | | | | CN | 117163517 | A | 05 December 2023 |
| CN | 111361908 | A | 03 July 2020 | CN | 111361908 | B | 15 October 2021 |
| CN | 114379969 | A | 22 April 2022 | WO | 2022078508 | A1 | 21 April 2022 |
| | | | | CN | 114379969 | B | 27 June 2023 |
| CN | 111453275 | A | 28 July 2020 | CN | 111453275 | B | 15 April 2022 |
| CN | 115626411 | A | 20 January 2023 | | None | | |
| US | 2021261333 | A1 | 26 August 2021 | EP | 3811305 | A1 | 28 April 2021 |
| | | | | US | 11993459 | B2 | 28 May 2024 |
| | | | | AT | 524014 | A5 | 15 January 2022 |
| | | | | CA | 3104334 | A1 | 26 December 2019 |
| | | | | AT | 17767 | U1 | 15 February 2023 |
| | | | | DE | 112019003069 | A5 | 15 April 2021 |
| | | | | WO | 2019241817 | A1 | 26 December 2019 |
| | | | | CN | 112513897 | A | 16 March 2021 |
| CN | 112278674 | A | 29 January 2021 | CN | 112278674 | B | 06 September 2022 |
| CN | 115158945 | A | 11 October 2022 | CN | 115158945 | B | 30 April 2024 |
| CN | 106966100 | A | 21 July 2017 | CN | 106966100 | B | 15 March 2019 |

Form PCT/ISA/210 (patent family annex) (July 2022)

**REFERENCES CITED IN THE DESCRIPTION**

**Patent documents cited in the description**

- CN 202310440134

- CN 202310434449